# EUROPEAN PATENT APPLICATION

(11) **EP 2 275 737 A1**
(43) Date of publication of application: **19.01.2011**
(21) Application number: 09726691.0
(22) Date of filing: 17.03.2009
(51) Int. Cl.: F21V 15/015, F21S 8/04, F21V 21/04, F21Y 101/02

(54) **COVER AND LIGHTING DEVICE WITH THE COVER**

(30) Priority: 03.04.2008 JP 2008097318; 27.06.2008 JP 2008169175; 01.07.2008 JP 2008172726
(71) Applicant: Sharp Kabushiki Kaisha, Osaka-shi, Osaka 545-8522 (JP)
(72) Inventor: OKAMURA, Noritaka, Osaka-shi, Osaka 545-8522 (JP); YAMAMOTO, Hiroyuki, Osaka-shi, Osaka 545-8522 (JP)
(74) Representative: Treeby, Philip David William
(86) International application number: PCT/JP2009/055142
(87) International publication number: WO 2009/122899

(57) **Abstract**

The invention provides a cover capable of covering a space formed between a mounted body mounted in a mounting hole formed in a member and an inner face of the mounting hole or a space formed between the mounted body and the member due to irregularities derived from burr or the like caused in the vicinity of an edge of the mounting hole and a lighting apparatus including the cover.

A decorative frame 1 for covering a space formed between a mounted body mounted in a mounting hole formed in a member and an inner face of the mounting hole has a flange 12 spaced from and opposing to the edge of the mounting hole; and a projecting part 15 provided to extend over the whole outer edge of the flange 12, and therefore, a space formed between the mounted body and the inner face of the mounting hole and a space formed between the mounted body and the member due to an irregularity such as burr caused in the vicinity of the edge of the mounting hole may be covered by the flange 12. Furthermore, since the projecting part 15 of the decorative frame 1 is in contact with the member over the whole circumference without forming any gap therebetween, shadow with various shades is not formed along the outer edge of the decorative frame 1, and thus, the decorative frame makes a contribution to the beauty.

## Description

### [Technical Field]

The present invention relates to a cover for covering a space formed between a mounted body mounted in a mounting hole formed in a member such as a ceiling board and the inner face of the mounting hole, and a lighting apparatus including the cover.

### [Background Art]

An apparatus such as a lighting apparatus corresponding to a mounted body to be mounted in a mounting hole formed in a member such as a ceiling board is inserted into the mounting hole to be fixed on the member with a mounting body such as a flat spring with an appropriate distance provided between the inner face of the mounting hole and a main body of the apparatus in general. Such an apparatus includes a cover for covering a space formed between the inner face of the mounting hole and the apparatus main body (see, for example, Patent Document 1).

A lighting apparatus disclosed in Patent Document 1 includes a lighting apparatus main body to be mounted in a mounting hole formed in a ceiling board; a fitting corresponding to a mounting body provided on a side face of the lighting apparatus main body; and a cover provided on a lower end of the lighting apparatus main body. This lighting apparatus has such a structure that the lighting apparatus main body is fixed by grasping upper and lower faces of the ceiling board between the upper face of the cover and the fitting with the lighting apparatus main body inserted into the mounting hole. In this lighting apparatus, the upper face of the cover provided on the lower end of the lighting apparatus main body is allowed to come into contact with the lower face of the ceiling board, so as to cover a space formed between the inner face of the mounting hole and the apparatus main body.
[Patent Document 1] Japanese Utility Model Application Laid-Open No. 5-87723

### [Disclosure of the Invention]

### [Problem to be Solved by the Invention]

A mounting hole is formed in a ceiling board by using a saw with a narrow face width, what is called a compass saw, a hole cutter with a predetermined diameter or the like. Therefore, burr protruding beyond the lower face of the ceiling board is unavoidably caused in cutting the ceiling board with a saw or in removing a cut portion of the ceiling board. Furthermore, when a lighting apparatus is to be exchanged, it is apprehended that a part of the edge of the mounting hole may be scraped to protrude beyond the lower face of the ceiling board by the fitting in removing the lighting apparatus to be exchanged.

When irregularities derived from burr or the like are caused in a portion of the lower face of the ceiling board in the vicinity of the mounting hole, the upper face of the cover cannot be allowed to wholly come into contact with the lower face of the ceiling board in the lighting apparatus disclosed in Patent Document 1, and hence, there arises a space between the upper face of the cover and the lower face of the ceiling board in accordance with the irregularities. As a result, there arise not only a problem that the quality in mounting the lighting apparatus is degraded but also a problem that the beauty is spoiled because of a shadow with various shades formed along the outer edge of the cover.

The present invention was devised in consideration of the such circumstances, and an object of the invention is providing a cover capable of covering a space formed between a mounted body mounted in a mounting hole formed in a member such as a ceiling board and the inner face of the mounting hole and a space formed between the mounted body and the member due to an irregularity such as burr caused in the vicinity of the edge of the mounting hole, and a lighting apparatus including the cover.

### [Means for Solving the Problem]

The cover of this invention is a cover attached to a mounted body to be mounted in a mounting hole formed in a member such as a ceiling board for covering a space formed between the mounted body and the mounting hole, and includes a covering part for covering a space formed between the mounted body and the member due to an irregularity such as burr of the mounting hole.

According to the invention, the cover is provided with the covering part for covering the space formed between the mounted body and the member due to the irregularity such as burr of the mounting hole. When the covering part is appropriately formed, a space formed between the mounted body and the inner face of the mounting hole and a space formed between the mounted body and the member due to the irregularity such as burr caused in the vicinity of the edge of the mounting hole may be covered.

In the cover of this invention, the covering part is provided in an outer edge of the cover.

According to the invention, the covering part is provided in the outer edge of the cover, and when the covering part is appropriately formed, a space formed between the mounted body and the member due to the irregularity such as burr may be covered even if the irregularity derived from burr or the like extends beyond the very vicinity of the edge of the mounting hole.

The cover of this invention for covering a space formed between a mounted body mounted in a mounting hole formed in a member and an inner face of the mounting hole, includes an opposing part spaced from and opposing to an edge of the mounting hole; and a covering part provided to extent over a whole outer edge of the opposing part.

According to the invention, the cover is provided with the opposing part spaced from and opposing to the edge of the mounting hole formed in the member; and the covering part provided to extend over the whole outer edge of the opposing part. When the cover is appropriately formed in accordance with the mounting hole and the mounted body, a space formed between the mounted body and the inner face of the mounting hole and a space formed between the mounted body and the member due to the irregularity such as burr caused in the vicinity of the edge of the mounting hole may be covered. Furthermore, when the covering part provided over the whole outer edge of the opposing part is appropriately formed, the cover may be made to come into contact with the member without forming any gap therebetween even if the irregularity derived from burr or the like extends beyond the very vicinity of the edge of the mounting hole. As a result, the invention makes a contribution to the beauty of the mounted body.

In the cover of this invention, the covering part has a notch.

According to the invention, since the covering part has the notch, the cover may be easily removed from the member by, for example, applying a force with a thin plate-shaped tool inserted into the notch.

In the cover of this invention, the notch has an inclined face widened toward an opening side.

According to the invention, since the notch has the inclined face widened toward the opening side, the cover may be easily removed from the member by, for example, applying a force for partly removing the frame from the member with a thin plate-shaped tool inserted into the notch and increasing the range of a gap from the member by moving the tool along the inclined face.

The cover of this invention further includes a reinforcing part provided on a face opposing the member in a position corresponding to the notch.

According to the invention, since the reinforcing part is provided on the face opposing the member in the position corresponding to the notch, when the reinforcing part is appropriately formed, for example, a force applied with a thin plate-shaped tool inserted into the notch may be dispersed to the reinforcing part, and therefore, the cover may be reinforced so that a portion having the notch of the covering part and a portion of the opposing part in the vicinity of the notch may not be deformed.

The cover of this invention further includes a projection disposed in the vicinity of the notch for stopping a tool to be inserted into the notch in a predetermined position.

According to the invention, the projection is disposed in the vicinity of the notch for stopping a tool to be inserted into the notch in the predetermined position, and when the projection is appropriately formed, for example, in the case where the notch is provided in the vicinity of a mounting body for mounting the mounted body on the member, a tool inserted into the notch may be prevented from reaching the mounting body, and therefore, a removing operation with the tool is not obstructed.

The lighting apparatus of this invention includes any of the aforementioned covers of the invention.

According to the invention, when the cover is appropriately formed in accordance with the mounting hole and a lighting apparatus main body, a space formed between the inner face of the mounting hole and the apparatus main body and a space formed between the lighting apparatus main body and the member such as a ceiling board due to an irregularity such as burr caused in the vicinity of the edge of the mounting hole may be covered. Furthermore, when the covering part provided over the outer edge of the cover is appropriately formed, a space formed between the mounted body and the member due to the irregularity such as burr may be covered even if the irregularity derived from burr or the like extends beyond the very vicinity of the edge of the mounting hole. As a result, the invention makes a contribution to the beauty of the lighting apparatus. Furthermore, the lighting apparatus may be easily removed from the ceiling board by, for example, applying a force with a thin plate-shaped tool inserted into the notch.

### [Effects of the Invention]

According to the present invention, without forming any gap from a member such as a ceiling board, a space formed between the inner face of a mounting hole and a lighting apparatus main body and a space formed between the mounted body and the member due to an irregularity such as burr caused in the vicinity of the edge of the mounting hole may be covered.

### [Brief Description of Drawings]

FIG. 1 is a plan view of a decorative frame according to Embodiment 1 of the invention.
FIG. 2 is a cross-sectional view taken on line II-II of FIG. 1.
FIG. 3 is a side view taken from a direction of arrows III-III of FIG. 1.
FIG. 4 is a partially enlarged perspective outside view of a portion in the vicinity of a notch of the decorative frame.
FIG. 5 is a schematic perspective outside view of a lighting apparatus including the decorative frame of Embodiment 1.
FIG. 6 is a side view of the lighting apparatus.
FIG. 7 is a diagram taken from a direction of arrows VII-VII of FIG. 6.
FIG. 8 is a diagram taken from a direction of arrows VIII-VIII of FIG. 6.
FIG. 9 is a diagram illustrating a state where the lighting apparatus is mounted on a ceiling board.
FIG. 10A is an outside view of a connector cover.
FIG. 10B is another outside view of the connector cover.
FIG. 11 is an outside view of a power module.
FIG. 12A is an outside view of a connector cover.
FIG. 12B is another outside view of the connector cover.
FIG. 13 is a diagram illustrating engagement between the connector covers.
FIG. 14 is a partly enlarged perspective outside view of a decorative frame according to Embodiment 2.
FIG. 15 is a partly enlarged perspective outside view of a decorative frame according to Embodiment 3.
FIG. 16 is a partly enlarged schematic cross-sectional view illustrating a portion in the vicinity of a notch of the decorative frame.
FIG. 17 is a partly enlarged schematic cross-sectional view of a lighting apparatus using a decorative frame according to Embodiment 4.
FIG. 18 is a partly enlarged schematic front view of the lighting apparatus.
FIG. 19 is a diagram illustrating an example of a filter.
FIG. 20 is a schematic plan view of a fall preventing member according to Embodiment 5 of the invention.
FIG. 21 is an enlarged diagram of a coil spring taken from a direction of arrows XXI-XXI of FIG. 20.
FIG. 22 is a perspective outside view of a lighting apparatus including the fall preventing member according to Embodiment 5.
FIG. 23 is a schematic side view of the lighting apparatus.
FIG. 24A is a diagram explaining a procedure for attaching a lighting apparatus main body to a mounting hole formed in a ceiling board.
FIG. 24B is a diagram explaining a procedure for attaching the lighting apparatus main body to the mounting hole formed in the ceiling board.
FIG. 24C is a diagram explaining a procedure for attaching the lighting apparatus main body to the mounting hole formed in the ceiling board.
FIG. 24D is a diagram explaining a procedure for attaching the lighting apparatus main body to the mounting hole formed in the ceiling board.
FIG. 25 is a schematic plan view of a fall preventing member according to Embodiment 6 of the invention.
FIG. 26 is a schematic plan view of a fall preventing member according to Embodiment 7 of the invention.
FIG. 27 is a schematic diagram of another shock absorbing means.
FIG. 28A is a diagram explaining an operation of a plate spring.
FIG. 28B is another diagram explaining the operation of the plate spring.
FIG. 29 is a diagram illustrating an example where a lighting apparatus main body and a power unit are connected to each other by using bent wires as a fall preventing member.
FIG. 30 is a schematic perspective outside view of a connector cover according to Embodiment 9 of the invention.
FIG. 31A is a schematic outside view of a first cover part.
FIG. 31B is another schematic outside view of the first cover part.
FIG. 32A is a schematic outside view of a second cover part.
FIG. 32B is another schematic outside view of the second cover part.
FIG. 33A is a diagram explaining a procedure for fixing the connector cover.
FIG. 33B is a diagram explaining a procedure for fixing the connector cover.
FIG. 34 is a perspective outside view of a lighting apparatus including the connector cover according to Embodiment 9.
FIG. 35 is a schematic side view of the lighting apparatus.
FIG. 36 is a cross-sectional view taken from a direction of arrows XXXVI-XXXVI of FIG. 35.
FIG. 37 is an outside view of a power module.
FIG. 38 is a diagram illustrating an example where a connector cover and a lighting apparatus main body are integrated with each other.

### [Explanation of Reference Numerals]

- 1, 1a, 1b, 1c: decorative frame (cover)
- 12: flange (opposing part)
- 15: projecting part (covering part)
- 15b: notch
- 15c: inclined face
- 16, 16a: reinforcing part
- 16b: projection
- 6: flat spring (mounting body)
- 10a: lighting apparatus main body (mounted body)
- 1100: ceiling board (member)
- 1100a: mounting hole
- 101, 101a, 101b: fall preventing member
- 102: radiator
- 103: LED module (light source)
- 110: lighting apparatus (supported member)
- 110a: lighting apparatus main body
- 111: hook (catching body)
- 112: coil spring (shock absorber, shock absorbing means)
- 113: wire
- 115: plate spring (shock absorber, shock absorbing means)
- 115d: slit
- 116: bent wire (shock absorber, shock absorbing means)
- 1101: supporting member
- 201: connector cover
- 202: first cover part
- 221: cylindrical part
- 223: projection (engaging means)
- 203, 203a: second cover part
- 231: cylindrical part
- 235: engaging piece (engaging means)
- 234: notch
- 234a: narrow part
- 281: female connector (first connector)
- 286: male connector (second connector)

### [Best Mode for Carrying Out the Invention]

Preferred embodiments of the invention will now be described with reference to accompanying drawings illustrating them. In the following description, a decorative frame of a lighting apparatus mounted in a mounting hole of a member such as a ceiling board will be exemplarily described as a cover according to the present invention. It is noted that a downlight is exemplarily described as the lighting apparatus.

### (EMBODIMENT 1)

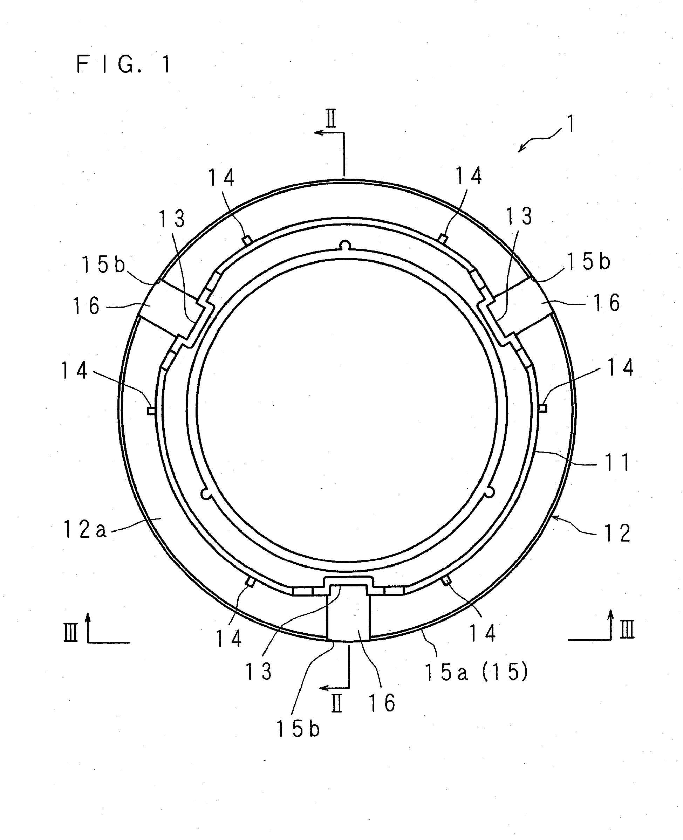

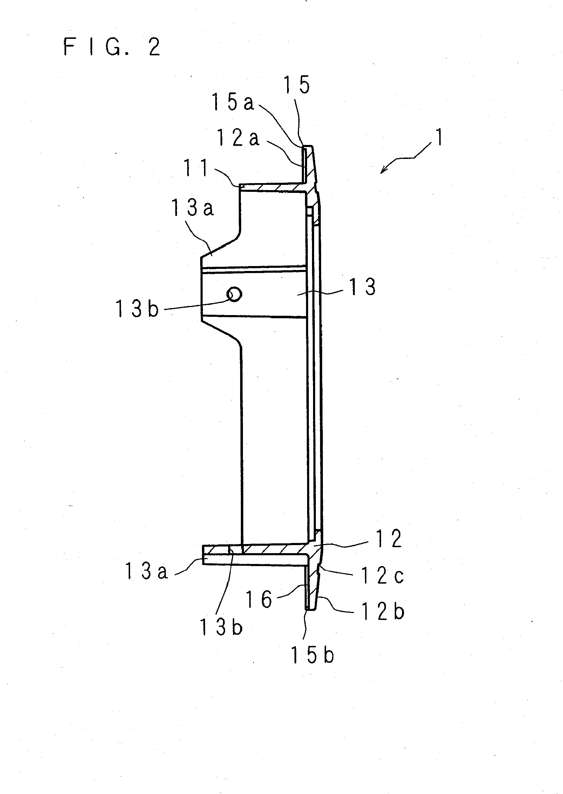

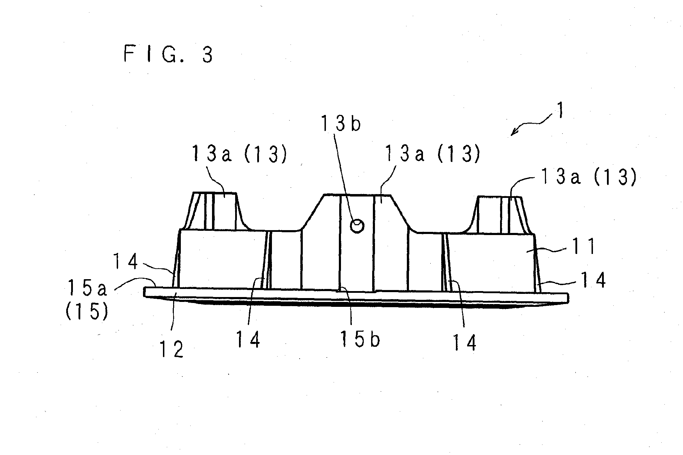

FIG. 1 is a plan view of a decorative frame 1 according to Embodiment 1 of the invention. FIG. 2 is a cross-sectional view thereof taken on line II-II of FIG. 1 and FIG. 3 is a side view taken from a direction of arrows III-III of FIG. 1.

The decorative frame 1 is used for covering a space formed between a mounted body mounted in a mounting hole formed in a member such as a ceiling board and the inner face of the mounting hole. This will be described in detail later. The decorative frame 1 includes a cylindrical part 11 and a flange 12 corresponding to an opposing part extended from one end of the cylindrical part 11 in a perpendicular direction on both sides along the radial direction. Incidentally, the decorative frame 1 of this embodiment is made of a resin integrally formed by injection molding and is preferably made of a polycarbonate resin, that is, a material having high mechanical strength such as shock resistance and having frame retardance.

The cylindrical part 11 has fixing parts 13 formed in three positions along the circumferential direction by depressing corresponding portions over the whole length along the axial direction inward along the radial direction. An extended portion 13a extended from each fixing part 13 along the axial direction opposite to the flange 12 is provided with a through hole 13b.

The flange 12 provided on the one end of the cylindrical part 11 and having a disc shape with an opening at the center is formed to have a first face 12a substantially flat on the side of the cylindrical part 11 and a second face 12b as an inclined face gently inclined from the inside to the outside along the radial direction. A plurality of (specifically, six in the drawings) reinforcing plates 14 each in a right triangular shape are provided between the cylindrical part 11 and the flange 12 at right angles against the cylindrical part 11 and the flange 12 and at equal intervals along the circumferential direction. Owing to the reinforcing plates 14, the flange 12 may be prevented from being deformed by a force applied in a removing operation. It is noted that the decorative frame 1 is attached to the mounted body or the member with the first face 12a of the flange 12 spaced from and opposing to the edge of the mounting hole in which the mounted body is to be mounted. The shape and the dimension of the flange 12 are appropriately set in accordance with the mounting hole formed in the member such as a ceiling board, the space formed between the mounted body mounted in the mounting hole and the inner face of the mounting hole, and the like.

Furthermore, in the second face 12b of the flange 12, a circular groove 12c having substantially the same diameter as the cylindrical part 11 is concentrically formed. This groove 12c is provided for making inconspicuous molding sink, that is, a recess, caused by any possibility during the fabrication of the decorative frame 1 through the injection molding due to variation in the solidifying rate of a molten resin in accordance with the thickness. Accordingly, the groove 12c is not limited to the circular shape as in this embodiment but may be in any shape according with the shape of the cylindrical part 11.

On the outer edge of the flange 12 on the side of the first face 12a, a projecting part 15 corresponding to a covering part in a flat cylindrical shape is formed to be perpendicular to the first face 12a and to project in parallel to the cylindrical part 11 over the whole circumference. The thickness along the radial direction of the projecting part 15 is preferably as small as possible for securing an area opposing a portion in the vicinity of the edge of the mounting hole while keeping rigidity sufficient for avoiding deformation caused by a reaction force applied by the member in mounting the mounted body in the mounting hole of the member such as a ceiling board as described later. It is noted that the height of the projecting part 15 is appropriately set in accordance with the material for the member such as a ceiling board on which the decorative frame 1 is used, the diameter of the mounting hole formed in the member and the like.

On a face of the projecting part 15 opposing the ceiling board, a plurality of (specifically, three in these drawings) notches 15b in the shape of a shallow rectangular parallelepiped recess are provided in the same positions along the circumferential direction as the fixing parts 13. Incidentally, the depth of each notch 15b is as small as possible as far as a thin plate-shaped tool may be inserted into the notch 15b with the decorative frame 1 attached to the member, and is, for example, 0.5 mm. The length of each notch 15b along the circumferential direction of the projecting part 15 is appropriately set in consideration of the dimension of the tool.

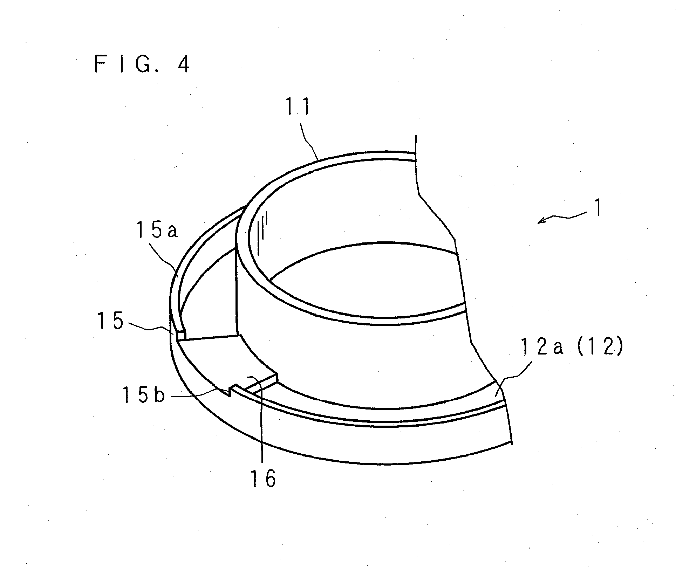

FIG. 4 is a partially enlarged perspective outside view of a portion in the vicinity of the notch 15b of the decorative frame 1, which is illustrated as a simplified schematic diagram. As illustrated in FIGS. 1 and 4, on the first face 12a of the flange 12, a reinforcing part 16 is provided correspondingly to each notch 15b, namely, in the same position along the circumferential direction as each notch 15b, over the whole length along the radial direction of the flange 12 sandwiched between the notch 15b and the corresponding fixing part 13. The upper face of the reinforcing part 16 is placed at the same level as the bottom face of the notch 15b.

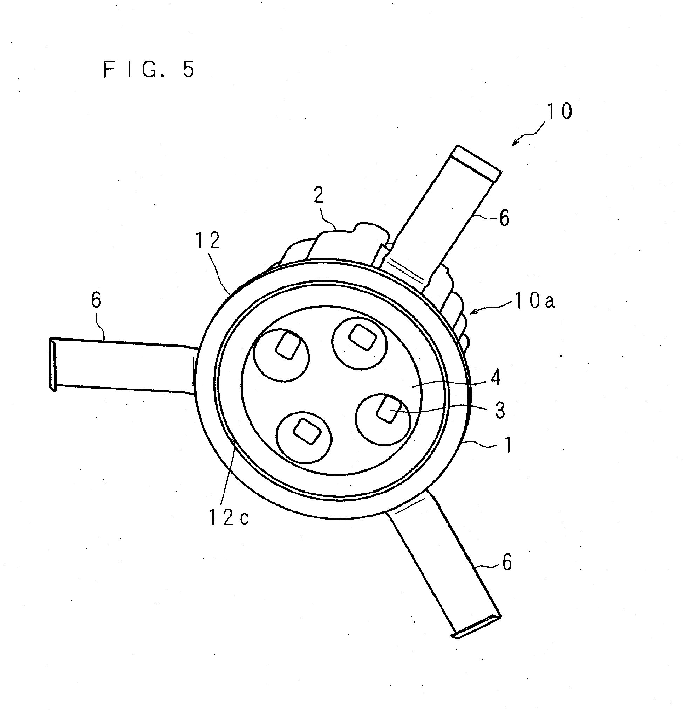

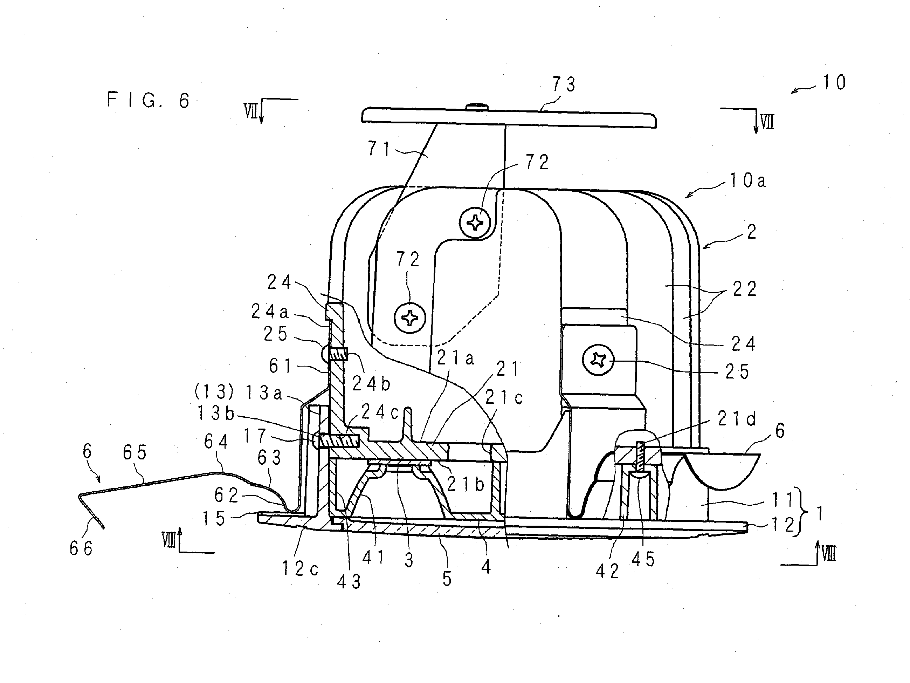

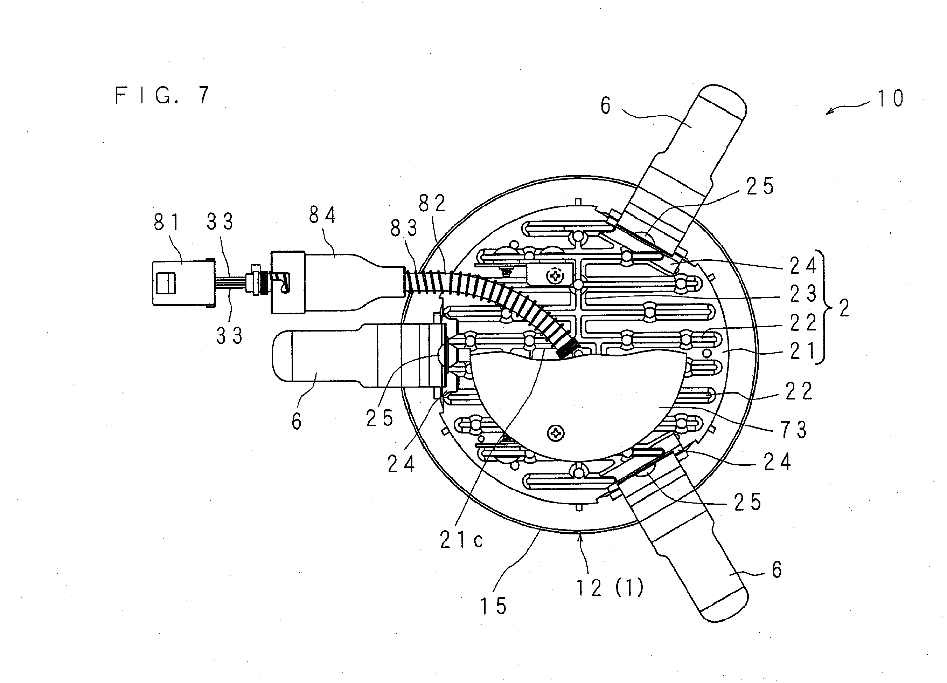

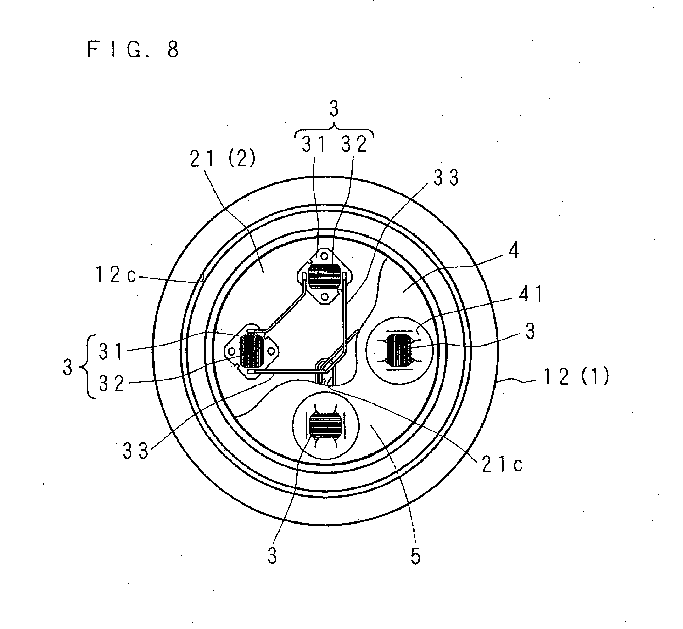

FIG. 5 is a schematic perspective outside view of a lighting apparatus 10 including the decorative frame 1 of Embodiment 1. FIG. 6 is a side view of the lighting apparatus 10, a part of which is illustrated as a partial cross-sectional view. FIG. 7 is a diagram taken from a direction of arrows VII-VII of FIG. 6, a part of which is illustrated as a partial cross-sectional view. FIG. 8 is a diagram taken from a direction of arrows VIII-VIII of FIG. 6, a part of which is illustrated as a partial cross-sectional view.

In these drawings, a reference numeral 10a denotes a lighting apparatus main body. The lighting apparatus main body 10a includes a radiator 2 made of a metal such as aluminum. The radiator 2 includes a heat transfer plate 21 in a substantially disc shape. On a first face 21a of the heat transfer plate, a plurality of (specifically 10 in the drawings) heat sinking plates 22 in the shape of a rectangular plate are provided to stand in parallel to one another. On the first face 21a of the heat transfer plate, a connecting plate 23 is provided to extend through substantially the centers of the plurality of heat sinking plates 22 perpendicularly to the heat sinking plates 22. It is noted that the connecting plate 23 is formed to avoid the center of the heat transfer plate 21 as illustrated in FIG. 7, and a through hole 21c for wiring is provided at the center of the heat transfer plate 21. In a lighting apparatus in which a plurality of LED modules described later are provided along the circumferential direction of the heat transfer plate 21, the LED modules may be easily wired by providing the through hole 21c for wiring at the center of the heat transfer plate 21.

A plurality of tapped holes 21d are provided in a peripheral portion of the heat transfer plate 21. Furthermore, attaching parts 24 each in the shape of a rectangular plate are provided in the peripheral portion of the heat transfer plate 21 of the radiator 2 to be perpendicular to the radial direction of the heat transfer plate 21 and stand in three positions at equal intervals along the circumferential direction. Each of the attaching parts 24 is connected to and integrated with a plurality of heat sinking plates 22, and one of the attaching parts 24 is disposed to be connected to the heat sinking plates 22 at right angles. The outer face 24a of each attaching part 24 is formed as a flat face. Tapped holes 24b and 24c are formed in upper and lower portions of each attaching part 24. Incidentally, the radiator 2 is integrally formed by die casting in this embodiment, which does not limit the invention, and the radiator 2 may be formed by extrusion or by cutting.

On a second face 21b of the heat transfer plate 21 of the radiator 2, a plurality of (specifically four in the drawings) LED modules 3 working as light sources are provided at equal intervals along the circumferential direction as illustrated in FIG. 8. Each of the LED modules 3 includes a rectangular substrate 31 of ceramic (such as aluminum oxide); a light emitting part 32 having a plurality of (for example, 36) LED devices collectively packaged at the center of one face of each ceramic substrate 31 and an encapsulating resin, for encapsulating the plurality of LED devices, containing a phosphor dispersed therein; and an input terminal and an output terminal. The input terminal and the output terminal of each LED module 3 are connected to lead wires 33. It is noted that a heat conduction sheet or grease is preferably provided between the LED modules 3 and the heat transfer plate 21. Heat generated from the LED modules 3 in turning on the LED modules 3 is transferred to the heat transfer plate 21, the heat sinking plates 22 and the connecting plate 23 of the radiator 2, so as to be externally released through natural convection. It is noted that the surface of the radiator 2 is preferably black or the like from the viewpoint of acceleration of radiation heat release.

A reflector plate 4 is provided on the side of the second face 21b of the heat transfer plate 21 of the radiator 2. On the reflector plate 4, a plurality of reflecting parts 41 each having a substantially hemispherical recess are formed in positions corresponding to the LED modules 3 so as to surround the corresponding LED modules 3 when the reflector plate 4 is attached to the radiator 2. The reflector plate 4 is made of a metal such as stainless steel, a metal coated with a coating having high reflectance, a microcellular foam light reflecting material having optical characteristics of high reflectance (of approximately 98%) and high diffuse reflectance (of approximately 95%) (such as MCPET (registered trademark)), or a resin material (such as polycarbonate) packed with a material of a metal oxide (such as titanium dioxide) or the like having a light scattering property.

The reflector plate 4 is provided with fixing parts 42 each having a substantially cylindrical recess in positions corresponding to the tapped holes 21d of the heat transfer plate 21 when the reflector plate 4 is attached to the radiator 2. Furthermore, a peripheral wall 43 is provided to stand at the periphery of the reflector plate 4. The reflector plate 4 is fixed on the radiator 2, with the end face of the peripheral wall 43 in contact with the heat transfer plate 21, by inserting screws 45 into through holes formed in the fixing parts 42 of the reflector plate 4 and screwing them into the tapped holes 21d provided in the heat transfer plate 21. Light emitted from the LED modules 3 is reflected by the reflecting parts 41 of the reflector plate 4, so as to have an angle against the optical axis of each LED module 3 not more than a predetermined angle. As a result, the lighting apparatus emits light controlled in its luminous intensity distribution characteristic so as to have high luminance in a position directly below the lighting apparatus.

The lighting apparatus main body 10a having the aforementioned structure is provided with the decorative frame 1 of the invention described above on a side of the heat transfer plate 21 of the radiator 2. It is noted that the through holes 13b of the fixing parts 13 are disposed in positions respectively corresponding to the tapped holes 24c of the attaching parts 24 of the radiator 2 when the decorative frame 1 is attached to the radiator 2. The decorative frame 1 is fixed on the radiator 2 by fitting the reflector plate 4 in the cylindrical part 11, inserting screws 17 into the through holes 13b with the extended portions 13a of the fixing parts 13 kept in contact with the outer faces 24a of the attaching parts 24 and screwing the screws 17 into the tapped holes 24c. On the inner face of the flange 12 disposed inside the decorative frame 1, a transparent plate 5 made of a resin in a disc shape is provided so as to cover the LED modules 3. The transparent plate 5 is made of, for example, a polycarbonate resin.

Furthermore, a plurality of (specifically, three in the drawings) flat springs 6 are provided on the side of the heat transfer plate 21 of the radiator 2. Each flat spring 6 is made of a metal such as stainless steel and is formed into a V-shape as illustrated in FIG. 6 by bending a long and narrow rectangular plate. Each flat spring 6 has an attaching part 61 in the shape of a rectangular plate on one side thereof. On the other side of the flat spring 6 beyond a bent part 62, a first pressing part 63 and a second pressing part 64 each having an arc-shaped cross-section along the lengthwise direction of the flat plate 6 are connectively provided.
It is noted that the first pressing part 63 and the second pressing part 64 are different in the curvature radius of the bend, and specifically, the second pressing part 64 has a curvature radius R2 larger than a curvature radius R1 of the first pressing part 63 (i.e., R1 < R2). Furthermore, the end of the flat spring 6 on the latter side is provided with a hook part 66 formed by bending the rectangular plate at an end of an arm part 65 connected to the second pressing part 64 at an angle against the arm part 65 toward the opposite side to the attaching part 61.

These flat springs 6 are fixed on the radiator 2 in three positions at equal intervals along the circumferential direction, with the attaching parts 61 of the flat springs 6 kept in close contact with the outer faces 24a of the attaching parts 24, by inserting screws 25 into through holes formed in the attaching parts 61 of the flat springs 6 and screwing them into the tapped holes 24b formed in the attaching parts 24 of the radiator 2. It is noted that the aforementioned decorative frame 1 is fixed with the fixing parts 13 kept in contact with the attaching parts 24 of the radiator 2. The notches 15b of the decorative frame 1 are provided in the same positions along the circumferential direction as the flat springs 6 provided as described above.

It is noted that the hook part 66 is provided for preventing fall of the lighting apparatus 10 when the first pressing part 63 and the second pressing part 64 of the flat spring 6 are not in contact with the ceiling board. Furthermore, each of the heat sinking plates 22 disposed outside the radiator 2 is provided with a through hole (not shown). The through hole is caught by one end of a wire through a hook or the like. The other end of the wire is fixed on a beam of a building. Therefore, if the lighting apparatus 10 cannot be held by the hook part 66 but falls off from the mounting hole formed in the ceiling board, for example, at the time of a disaster of an earthquake or the like, the lighting apparatus 10 may be prevented from falling onto the floor. If shock caused in the fall is too large for the wire alone, an extension spring may be provided therebetween.

An attaching plate 71 is fixed with a screw 72 on each of the heat sinking plates 22 disposed in the second positions from the outside of the radiator 2, so as to be parallel to the heat sinking plates 22. A circular plate 73 is provided on the attaching plates 71 at right angles against the attaching plates 71. This circular plate 73 may prevent foreign substances such as dust from entering the lighting apparatus main body 10a, particularly a space between the heat sinking plates 22, and in addition, when the upper portion of the lighting apparatus main body 10a is covered with a heat insulating material, an air passage for releasing, to the outside, air warmed through heat transfer from the surfaces of the heat sinking plates 22 and the connecting plate 23 of the radiator 2 may be secured. Furthermore, the circular plate 73 effectively functions as protection against external dust, a waterdrop from upstairs and the like.

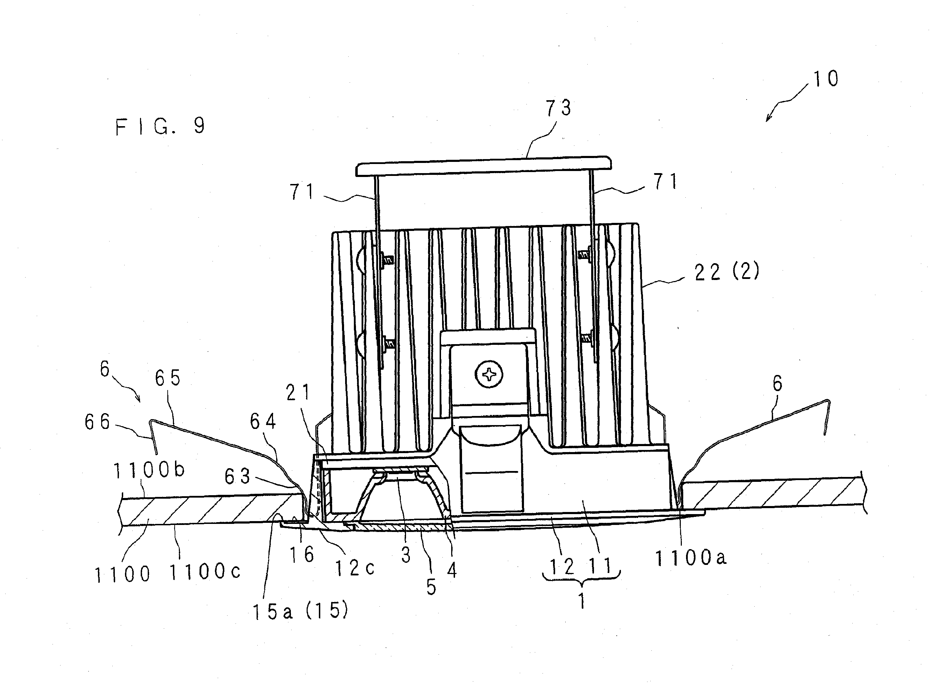

The lighting apparatus 10 having the aforementioned structure is fixed in the mounting hole formed in the ceiling board with the flat springs 6 with the side of the transparent plate 5 disposed on the underside, so as to be used as what is called a downlight. The lighting apparatus 10 is mounted on the ceiling board with the lighting apparatus main body 10a disposed at an appropriate distance from the inner face of the mounting hole with a diameter of, for example, 125 mm, formed in the ceiling board. FIG. 9 is a diagram illustrating a state where the lighting apparatus 10 is mounted on the ceiling board.

The lighting apparatus 10 is fixed in a mounting hole 1100a formed in a ceiling board 1100 as illustrated in FIG. 9 by inserting the lighting apparatus 10 into the mounting hole 1100a of the ceiling board 1100 from the underside with the arm parts 65 of the flat springs 6 pressed against the lighting apparatus main body 10a and by further pushing the lighting apparatus main body 10a upward with the flat springs 6 released. More specifically, each flat spring 6 elastically deformed when pushed against the lighting apparatus main body 10a in mounting it in the mounting hole 1100a is to be restored to a natural state illustrated in FIG. 6 when the pushing force is removed, and at this point, the first pressing part 63 of the flat spring 6 comes into contact with the upper edge of the mounting hole 1100a in the vicinity of substantially the center of its arc shape from diagonally above. Therefore, a component force downward, that is, a vertical direction to the mounting face of the ceiling board 1100, that is, the member, is applied, so that an upper face 1100b of the ceiling board 1100 may be pressed downward by the first pressing part 63, and a component force upward is applied to the lighting apparatus main body 10a, so that a lower face 1100c of the ceiling board 1100 may be pressed upward by the upper face of the flange 12. As a result, the lighting apparatus 10 is fixed on the ceiling board 1100 with the ceiling board 1100 grasped between the first pressing part 63 and the flange 12.

When the lighting apparatus 10 is fixed on the ceiling board 1100 in this manner, since the decorative frame 1 of this embodiment is used, a space formed between the lighting apparatus main body 10a and the inner face of the mounting hole 1100a may be covered by the flange 12 of the decorative frame 1, that is, the opposing part, spaced from and opposing to the edge of the mounting hole 1100a of the ceiling board 1100. Furthermore, the upper face 12a of the flange 12 is at an appropriate distance from the lower face 1100c of the ceiling board 1100, and hence, even when burr is caused in the vicinity of the edge of the mounting hole 1100a, or decorative paper adhered onto the lower face 1100c of the ceiling board 1100 is peeled off, the burr or the peeling of the decorative paper may be kept out of sight. Since a distance between the upper face 12a of the flange 12 and the lower face 1100c of the ceiling board is kept constant over a wide range from the inner edge side of the flange 12 (namely, the side closer to the cylindrical part 11) to the outer edge side thereof (namely, the side closer to the projecting part 15), even if the burr, the peeling of the decorative paper or the like extends beyond the very vicinity of the edge of the mounting hole 1100a, the blur, the peeling of the decorative paper or the like may be kept out of sight. Moreover, since the projecting part 15 of the decorative frame 1 is in contact with the lower face 1100c of the ceiling board 1100 with no gap formed therebetween over the whole edge, no shadow with various shades is formed along the outer edge of the decorative frame 1, and thus, the quality of the mounting is not degraded and the decorative frame 1 makes a contribution to the beauty of the lighting apparatus.

In the lighting apparatus 10 thus mounted on the ceiling board 1100, power is supplied to the LED modules 3 from an external power supply through a power unit provided outside the lighting apparatus main body 10a.

Each of the LED modules 3 is connected to ends on one side of the plural (four in the drawings) lead wires 33 through the through hole 21c provided at the center of the heat transfer plate 21. The ends on the other side of the lead wires are connected to a female connector 81 as illustrated in FIG. 7. The lead wires 33 are brought together by a protection tube 82 on a side of the female connector 81. A protection spring 83 made of a metal is fit around the outer circumference of the protection tube 82. Thus, the lead wires 33 may be prevented from being gnawed by a noxious animal such as a rat.

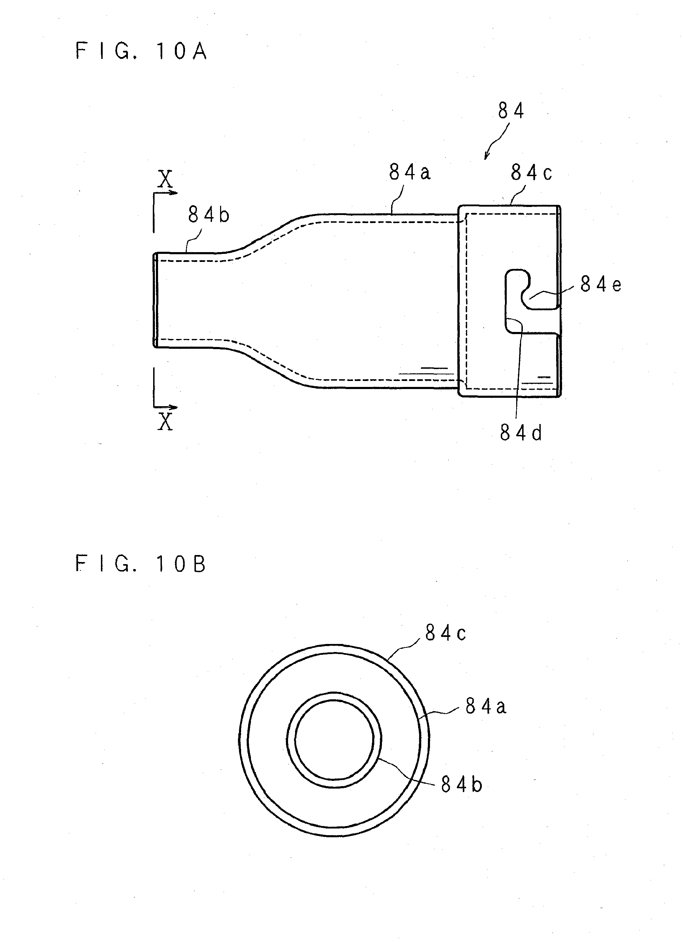

The female connector 81 in the shape of a flat rectangular parallelepiped is a connection terminal having a recess to fit a convex of a male connector described later, and is protected by a connector cover 84 corresponding to a cover part. FIG. 10A and 10B are outside views of the connector cover 84. FIG. 10A is a front view of the connector cover 84 and FIG. 10B is a diagram taken from a direction of arrows X-X of FIG. 10A.

The connector cover 84 includes a cylindrical part 84a; a narrow part 84b connected to one side of the cylindrical part 84a and having a smaller diameter than the cylindrical part 84a; and a wide part 84c connected to the other side of the cylindrical part 84a and having a larger diameter than the cylindrical part 84a. The narrow part 84b has an inner diameter larger than the outer diameters of the protection tube 82 and the protection spring 83. The cylindrical part 84a and the wide part 84c are formed to be capable of housing the female connector 81 therein. The wide part 84c is provided with notches 84d each cut in a substantially L-shape disposed in two positions at equal intervals along the circumferential direction.

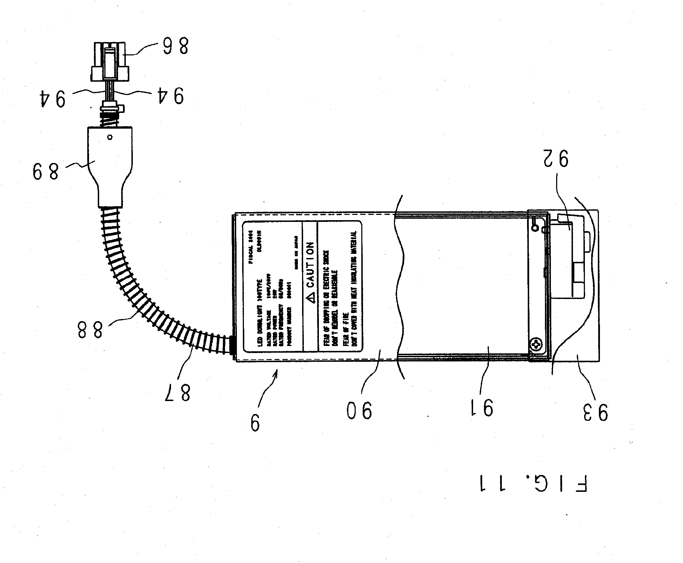

FIG. 11 is an outside view of a power module, a part of which is illustrated as a partial cross-sectional view. The power module 9 includes a power unit cover 90 in a rectangular parallelepiped external shape; a power unit 91 housed in the power unit cover 90 and including various circuit components such as a transformer, a resistor and a capacitor; a terminal table 92 connected to the power unit 91; and a terminal cover 93 housing the terminal table 92 and externally fit on one side of the power unit cover 90.

The power unit 91 of the power module 9 is connected to ends on one side of lead wires 94. The ends on the other side of the lead wires 94 are connected to a male connector 86 as illustrated in FIG. 11. The lead wires 94 are brought together by a protection tube 87. A metal protection spring 88 is externally fit around the outer circumference of the protection tube 87. Thus, the lead wires 94 may be prevented from being gnawed by a noxious animal such as a rat.

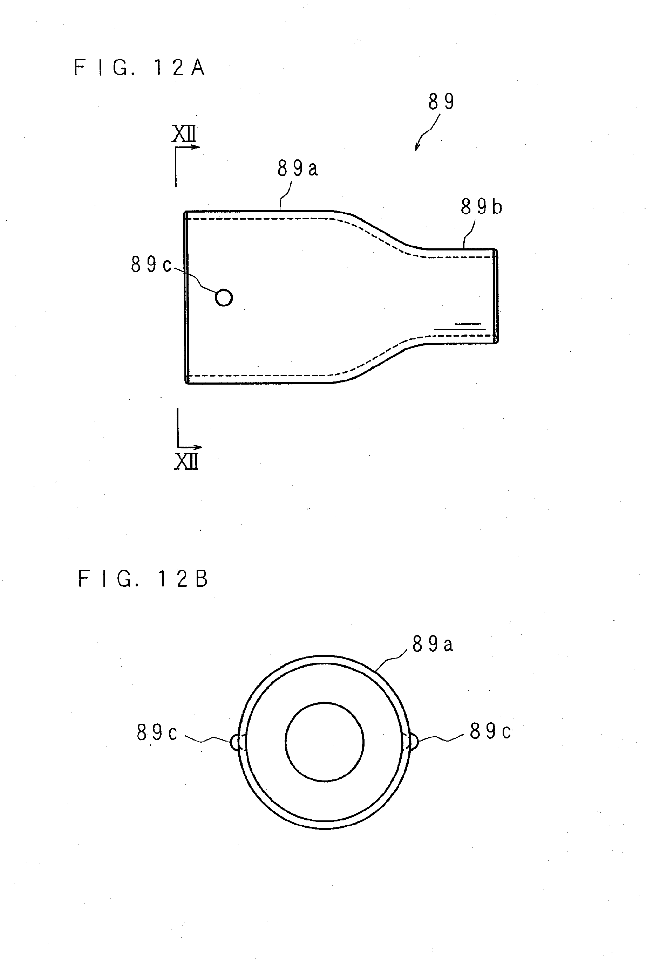

The male connector 86 in the shape of a flat rectangular parallelepiped is a connection terminal having a plurality of (specifically, four in the drawing) convexes, and is protected by a connector cover 89 corresponding to a cover part. FIGS. 12A and 12B are outside views of the connector cover 89. FIG. 12A is a front view of the connector cover 89 and FIG. 12B is a diagram taken from a direction of arrows XII-XII of FIG. 12A.

Incidentally, the shapes and the systems of the male and female connectors differ among different types of apparatuses employing different specifications, and hence, there is no fear of making a mistake in combination of a lighting apparatus and a power module. Particularly when there is a lineup of merely two types of apparatuses, the mistake may be avoided by employing a male connector for a lighting apparatus main body and a female connector for a power module of a lighting apparatus of type A; and employing a female connector for a lighting apparatus main body and a male connector for a power module of a lighting apparatus of type B.

The connector cover 89 includes a cylindrical part 89a, and a narrow part 89b connected to one side of the cylindrical part 89a and having a smaller diameter than the cylindrical part 89a. The narrow part 89b has an inner diameter larger than outer diameters of the protection tube 87 and the protection spring 88. The cylindrical part 89a is formed to be capable of housing the male connector 86 therein. Furthermore, the cylindrical part 89a is provided with projections 89c each projecting in a hemispherical shape and disposed in two positions at equal intervals along the circumferential direction. Each projection 89c has a diameter equal to a dimension of the narrowest portion of each notch 84d.

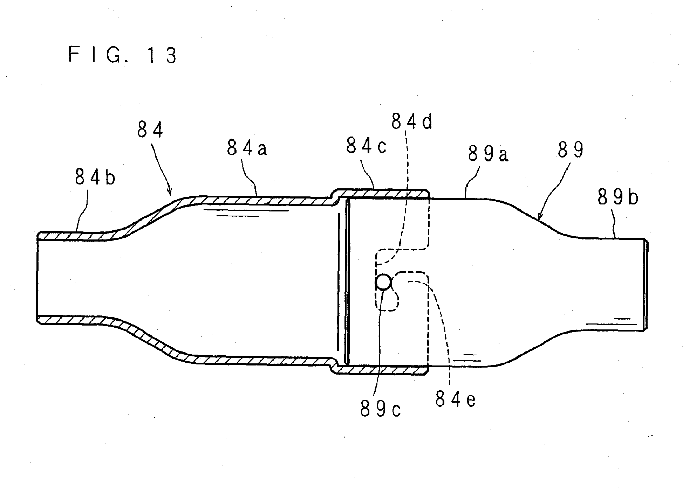

FIG. 13 is a diagram illustrating engagement between the connector covers 84 and 89. When the male connector 86 connected to the power module 9 is fit in the female connector 81 connected to the LED modules 3, the power unit 91 provided outside the lighting apparatus main body 10a is connected to the LED modules 3 through the lead wires 94 and 33. Thereafter, the connector cover 89 is inserted into the wide part 84c of the connector cover 84 with the projections 89c respectively aligned with the notches 84d, and is relatively rotated. Through the relative rotation, the projections 89c apply an outward force along the radial direction to pressing pieces 84e cut in the notches 84d, and the pressing pieces 84e are slightly yielded outward, and the pressing pieces 84e are to restore to a natural state against this yield and apply an inward force along the radial direction to the projections 89c, so as to integrally connect the connector cover 84 and the connector cover 89 to each other. In this manner, the male connector 86 and the female connector 81 are housed in the connector covers 84 and 89, so as to protect the male connector 86 and the female connector 81 from a noxious animal such as a rat.

The lighting apparatus 10 thus mounted in the mounting hole 1100a formed in the ceiling board 1100 is removed from the ceiling board 1100 for exchange or the like. A removing operation is performed by applying a force (of, for example, 2 to 3 times as large as the weight of the lighting apparatus) by inserting a thin plate-shaped tool into the notch 15b so as to cause a gap (of, for example, approximately 1 mm) from the ceiling board 1100 and pulling the lighting apparatus 10 down by applying a larger downward force (of, for example, 5 to 6 times as large as the weight of the lighting apparatus).

In the lighting apparatus 10 including the decorative frame 1 of this embodiment, a plurality of notches 15b each having a shallow rectangular parallelepiped recess extending over an appropriate circumferential length of the projecting pat 15 are formed in the projecting part 15 of the decorative frame 1. Therefore, when a force is applied by inserting the thin plate-shaped tool into the notch 15b, a sufficiently large downward force may be easily applied to the lighting apparatus 10, and hence, the lighting apparatus may be easily removed from the ceiling board 1100. Incidentally, the depth of each notch 15b is as small as possible as far as the thin plate-shaped tool may be inserted into the notch 15b with the decorative frame 1 mounted on the ceiling board 1100, and is set to, for example, 0.5 mm. Accordingly, since there is merely a slight gap from the ceiling board 1100 when the lighting apparatus 10 is mounted on the ceiling board 1100, shadow formed along the outer edge of the decorative frame 1 is minimally changed in the shade, and no space is formed from the ceiling board, and thus, the beauty is not spoiled.

Furthermore, the reinforcing parts 16 are provided on the side of the first face 12a of the flange 12 in the portions corresponding to the notches 15b, namely, in the same positions along the circumferential direction as the notches 15b, over the whole length along the radial direction of the flange 12 sandwiched between the notches 15b and the fixing parts 13 with the upper faces of the reinforcing parts 16 placed at the same level as the bottom faces of the notches 15b. Therefore, when the force is applied with the thin plate-shaped tool inserted into the notch 15b, the force is also dispersed to the reinforcing part 16, and hence, a portion of the projecting part 15 having the notch 15b and a portion of the flange 12 in the vicinity of the notch 15b may be reinforced not to be deformed.

Moreover, the notches 15b are provided in the projecting part 15 of the decorative frame 1 so as to be in the same positions along the circumferential direction as the flat springs 6 when the lighting apparatus 10 is mounted. Therefore, the force applied by the thin plate-shaped tool inserted into the notch 15b to the decorative frame 1 against the force applied by the flat spring 6 is smaller than in the case where the notches are provided between two flat springs, and hence, the lighting apparatus 10 may be easily removed from the ceiling board 1100.

### (EMBODIMENT 2)

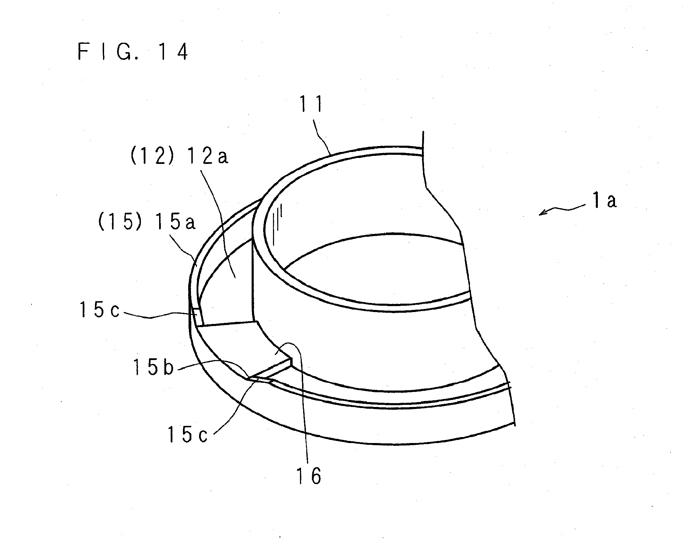

FIG. 14 is a partially enlarged perspective outside view of a decorative frame 1a according to Embodiment 2, and is illustrated as a simplified schematic diagram. Each of notches 15b provided in a projecting part 15 has inclined faces 15c widened toward the opening on both sides as illustrated in FIG. 14. The rest of the structure is the same as that of Embodiment 1 illustrated in FIG. 4, and hence, like reference numerals are used to refer to like elements illustrated in FIG. 4 so as to omit the detailed description of the structure.

When the decorative frame 1a of this embodiment is applied to the lighting apparatus main body 10a described in Embodiment 1, since the notches 15b provided in portions of an edge face 15a of the projecting part 15 have the inclined faces 15c widened toward the opening, the lighting apparatus may be more easily removed from the ceiling board by inserting a thin plate-shaped tool into the notch 15b for applying a force for partly removing it from the ceiling board and increasing a range of a gap from the ceiling board by moving the tool along the inclined face 15c.

Although the inclined face 15c is an inclined face with a constant slope in which the depth from the bottom face of the notch 15b to the edge face 15a of the projecting part 15 is linearly reduced in this embodiment, the invention is not limited to this, and the slope of the inclined face may be changed from the bottom face of the notch 15b to the edge face 15a of the projecting part 15. Alternatively, such a face is not limited to the inclined face but a portion between the bottom face of the notch 15b and the edge face 15a may be formed in any shape along which the tool may be moved in the circumferential direction of the flange 12.

### (EMBODIMENT 3)

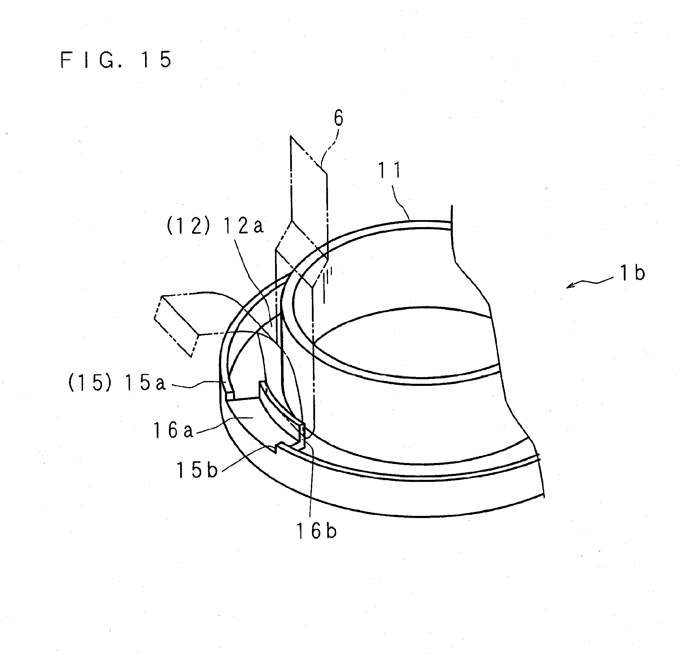

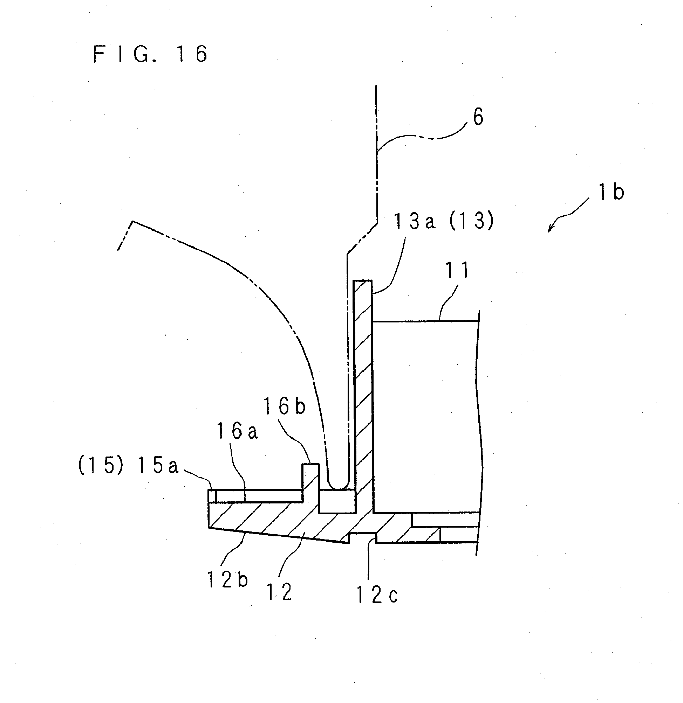

FIG. 15 is a partly enlarged perspective outside view of a decorative frame 1b according to Embodiment 3, and is illustrated as a simplified schematic diagram. FIG. 16 is a schematic partial cross-sectional view of a portion in the vicinity of one of notches 15b of the decorative frame 1b. On a first face 12a of a flange 12, a reinforcing part 16a is provided in a portion corresponding to each notch 15b, namely, in the same position along the circumferential direction as each notch 15b, over the whole length along the radial direction of the flange 12 sandwiched between the notch 15b and a fixing part 13. Each reinforcing part 16a is extended from each notch 15b in the radial direction of the flange 12, so as to have an extended end spaced from the outer face of the fixing part 13 by an appropriate distance. The upper face of the reinforcing part 16a is placed at the same level as the bottom face of the notch 15b.

A projection 16b in a rectangular plate shape is provided to stand at the extended end of each reinforcing part 16a so as to be spaced from and oppose to the fixing part 13. Incidentally, a distance between each fixing part 13 and each projection 16b is set so that a flat spring 6 may be disposed between the fixing part 13 and the projection 16b as illustrated with an alternate long and two short dashes line in the drawings when the decorative frame 1b is attached to the lighting apparatus main body 10a. The rest of the structure is the same as that of Embodiment 1 illustrated in FIGS. 2 and 4, and hence, like reference numerals are used to refer to like elements illustrated in FIGS. 2 and 4 so as to omit the detailed description of the structure.

In application of the decorative frame 1b of this embodiment to the lighting apparatus main body 10a described in Embodiment 1, since the flat springs 6 are positioned between the fixing parts 13 and the projections 16b, when a thin plate-shaped tool is inserted into each notch 15b, the tool is stopped by the projection 16b in a predetermined position, and thus, the movement of the tool is restricted so that the tool may not reach the flat spring 6. Therefore, when a force is applied to the tool, the flat springs 6 are not obstacles but the lighting apparatus may be smoothly removed.

Although each of the projections 16b is in a rectangular plate shape in this embodiment, the shape of the projection is not limited to this but the projection may be in any shape as far as the insertion of the tool may be obstructed for preventing the tool from reaching a portion in the vicinity of the flat spring.

Incidentally, in the decorative frame of each of Embodiments 1 through 3 described above, the projecting part 15 is provided with the three notches 15b disposed at equal intervals along the circumferential direction of the flange 12, which does not limit the invention. The number of notches may be appropriately set in accordance with the number of flat springs. The notches may be provided in positions in the vicinity of the flat springs, and there is no need to provide them in the same positions along the circumferential direction as the flat springs.

Moreover, each reinforcing part is formed to be at the same level as the bottom face of the notch in each of these embodiments, which does not limit the invention.

Furthermore, although the decorative frame is attached to the lighting apparatus main body 10a, the decorative frame may be attached to the member such as the ceiling board 1100 instead.

### (EMBODIMENT 4)

In the lighting apparatus including the decorative frame according to any of Embodiments 1 through 3 described above, when the power is turned on, a rectified DC current with a predetermined value is supplied from the power unit to the light sources such as the LED modules, and the light sources emit light in accordance with the supplied current. In a generally used lighting apparatus, the brightness on an irradiated face is changed by controlling the quantity of light emitted from the light source, and with a plurality of light sources different in the luminescent color used as light sources, the color of light obtained on an irradiated face irradiated with the light emitted from the plurality of light sources is changed by controlling the quantity of light emitted from each light source. In employing such a light adjusting method, the quantity of light and the color of light may be finely automatically changed, but the structure and the control are complicated. Therefore, a lighting apparatus capable of adjusting light to be emitted with a simpler structure is desired.

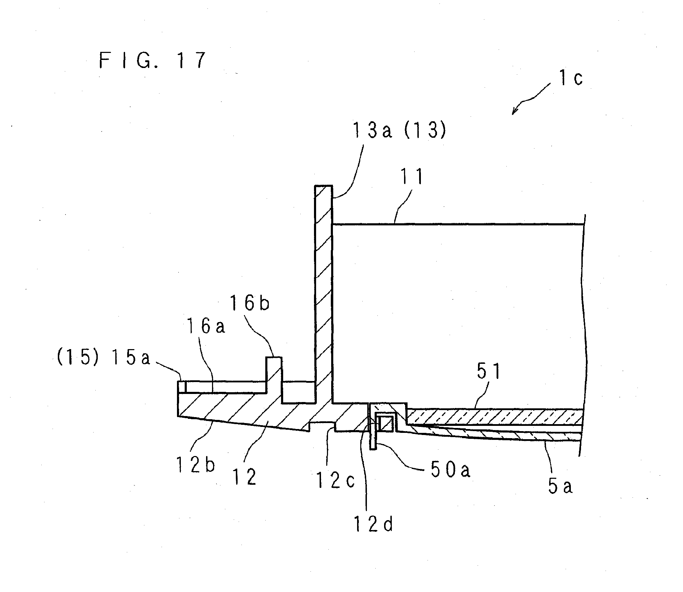

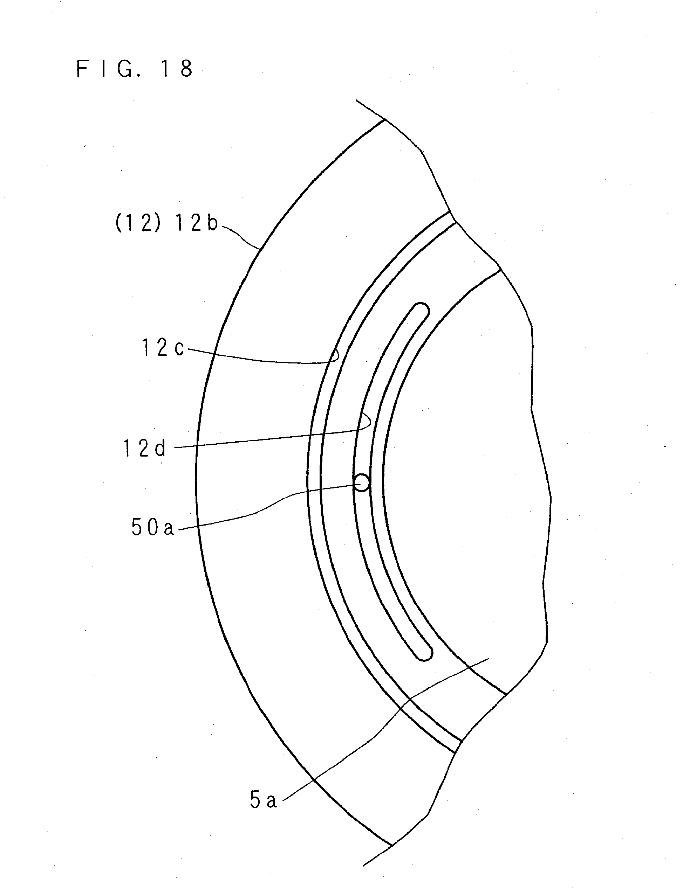

FIG. 17 is a partially enlarged cross-sectional view of a lighting apparatus using a decorative frame 1c according to Embodiment 4. FIG. 18 is a schematic partially enlarged front view of the lighting apparatus. It is noted that the lighting apparatus has the same structure as the lighting apparatus described in Embodiment 1.

In an inner edge portion of a flange 12 of the decorative frame 1c, a guide opening 12d in the shape of an arc concentric with the flange 12 is provided over an angle of approximately 90 degrees. The rest of the structure of the decorative frame 1c is the same as that described in Embodiment 3 and illustrated in FIG. 16, and hence, like reference numerals are used to refer to like elements illustrated in FIG. 3 so as to omit the detailed description of the structure.

On the inner face of the flange 12 disposed inside the decorative frame 1c, a transparent plate 5a made of a resin is provided so as to cover LED modules. The transparent plate 5a is in a substantially disc shape bent into a convex. A projection 50a in a cylindrical shape substantially perpendicular to the transparent plate 5a and extending in the convex direction of the transparent plate 5a is provided in a portion of the outer edge of the transparent plate 5a.

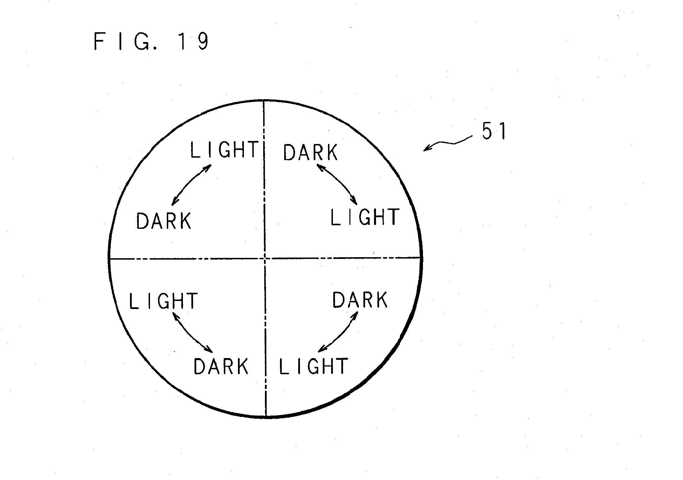

The transparent plate 5a is attached to the decorative frame 1c with the projection 50a inserted into the arc-shaped guide opening 12d provided on the decorative frame 1c as illustrated in FIG. 17. A disc-shaped filter 51 working as an optical member is fit above the transparent plate 5a. FIG. 19 illustrates an example of the filter 51.

The filter 51 is made of a colored polycarbonate resin, in which the shade of the color is continuously changed along the circumferential direction as illustrate in FIG. 19. In the filter 51 of this embodiment, the shade of the color is repeatedly changed along the circumferential direction with respect to every area corresponding to 90 degrees. The shade of the color is thus repeatedly changed with respect to every area corresponding to 90 degrees because this filter 51 is applied to the lighting apparatus including, as the light sources, the LED modules disposed in the four positions at equal intervals along the circumferential direction, and the angle for repeating the change is appropriately set in accordance with the number and the arrangement of light sources such as LED modules. It is noted that the material for the filter 51 is not limited to the polycarbonate resin but may be another resin such as an acrylic resin or glass.

In such a structure, when the projection 50a is moved along the guide opening 12d provided in the decorative frame 1c, the transparent plate 5a having the projection 50a is rotated, and the filter 51 fit in the transparent plate 5a is integrally rotated with the rotation of the transparent plate 5a. Light emitted from the LED modules mainly passes through a portion of the filter 51 disposed directly below the LED modules, and therefore, the shade of the color of the transmitted light may be changed in a stepless manner in accordance with the rotation of the filter 51.

The filter 51 is used for changing the shade of the color along the circumferential direction in this embodiment, which does not limit the invention. For example, a filter may be used for continuously changing the color along the circumferential direction. In this case, the color of light passing through the filter is changed according to the color of the filter in accordance with the rotation of the filter, and hence, the color of light obtained on an irradiated face may be changed. Alternatively, a filter colored uniformly with one color may be used, and in this case, the fabrication is advantageously easy as compared with the case where the transparent plate is colored.

Alternatively, a filter may be formed so as to continuously change the level of transmittance along the circumferential direction. In this case, since the quantity of light passing through the filter is changed in accordance with the rotation of the filter, the brightness attained on an irradiated face may be changed in a stepless manner. Alternatively, the degree of scattering light may be changed in accordance with a position along the circumferential direction.

Alternatively, a polarizing filter for cutting light excluding light of a predetremined direction may be used in order to prevent light reflection by reducing the quantity of light reflected by glass, a water surface or the like present in an outgoing direction of light from a light source. Alternatively, a sheet including different lenses or prisms arranged along the circumferential direction may be used for changing the outgoing direction of the light.

Although the filter 51 is formed for changing the shade of a color, the kind of color, the level of transmittance or the like along the circumferential direction in this embodiment, the transparent plate may be formed so as to change the shade of a color or the like along the circumferential direction instead of the filter 51, or the filter and the transparent plate may be formed to have different characteristics from each other.

Furthermore, although the filter 51 is rotated by rotating the transparent plate 5a with the projection 50a to be inserted into the guide opening 12d of the decorative frame 1c provided on the transparent plate 5a in this embodiment, the invention is not limited to this, and the filter may be directly rotated by providing a projection on the filter and inserting the projection into the guide opening 12d provided in the decorative frame 1c.

In each of Embodiments 1 through 4 described above, the LED modules 3 in which a plurality of LED devices are packaged are used as the light sources, which does not limit the invention, and an LED chip with high luminance, an EL (Electro Luminescence), a fluorescent lamp, a light bulb or the like may be used.

Furthermore, although the decorative frame is attached to the downlight in each of Embodiments 1 through 4 described above, the invention is not limited to the downlight but the decorative frame of this invention is applicable to other types of lighting apparatuses or equipment other than a lighting apparatus mounted on a member such as a ceiling board, and it goes without saying that the invention may be practiced in various modifications within the scope of the invention set out in the accompanying claims.

### (EMBODIMENT 5)

In a lighting apparatus such as a downlight mounted in a mounting hole formed in a member such as a ceiling board as the lighting apparatuses 10 according to each of Embodiments 1 through 4, a fall preventing member including a wire and a hook is generally provided as described above for preventing fall of the lighting apparatus down to the floor. In using such a fall preventing member, when the fall of a supported member such as a lighting apparatus is restricted, a force applied to the fall preventing member is directly applied to the hook, and it is apprehended that the hook may be opened so as to allow the supported member to fall down to the floor. Now, a fall preventing member capable of preventing a supported member from falling down to the floor by preventing release of engagement between the fall preventing member and the supported member will be described.

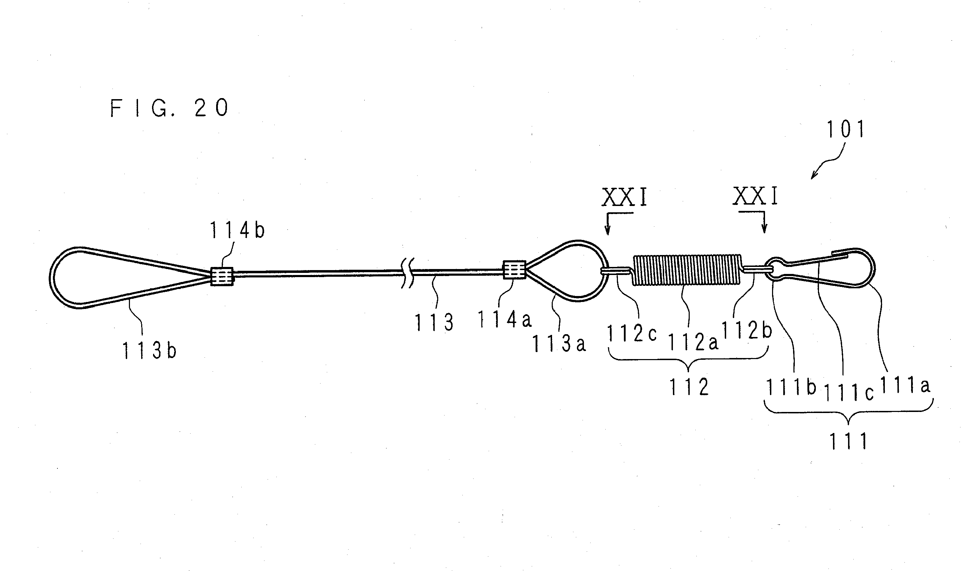

FIG. 20 is a schematic plan view of a fall preventing member according to Embodiment 5 of the invention. The fall preventing member 101 is used for preventing fall of a device mounted at a height such as a ceiling board for use (i.e., a supported member) by supporting the device on a supporting member such as a beam provided in a ceiling space.

The fall preventing member 101 includes a hook 111 corresponding to a catching body for catching a supported member. The hook 111 is made of a metal such as stainless steel and is formed by bending a long and narrow rectangular plate. The hook 111 has a catching part 11a bent in a J-shape as illustrated in FIG. 20. One end of the catching part 111a is connected to a connecting part 111b bent in a C-shape. The connecting part 111b is connected to a holding part 111c in a rectangular plate shape. The end of the holding part 111c is in contact with the catching part 111a from the inside.

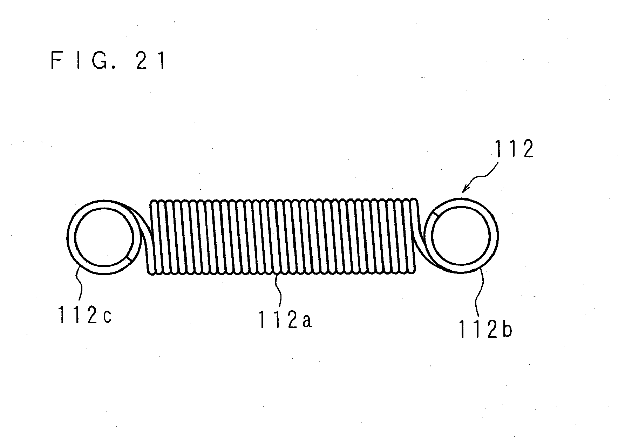

The connecting part 111b of the hook 111 is connected to a coil spring 112 corresponding to shock absorbing means. FIG. 21 is an enlarged view of the coil spring taken from a direction of arrows XXI-XXI of FIG. 20. The coil spring 112 is made of a metal such as stainless steel, and includes a spring part 112a formed by winding a metal wire into a spiral shape and connecting parts 112b and 112c in a loop shape provided on both sides of the spring part 112a. The coil spring 112 is connected to the hook 111 by catching the connecting part 112b with the connecting part 111b of the hook 111. It is noted that each of the connecting parts 112b and 112c is formed as a double loop for improving the rigidity. Furthermore, these metal members may be subjected to a heat treatment if necessary.

The coil spring 112 is preferably set so that the amplitude of the coil spring 112 may be approximately double of its natural length and that the number of oscillations may be small (preferably approximately two or three) when the supported member falls from a place where it is mounted. Incidentally, the coil spring 112 may be set to be used within a range of its elastic deformation or set to allow plastic deformation.

The connecting part 112c of the coil spring 112 is connected to a wire 113 made of a metal such as stainless steel. One end of the wire 113 is connected to the coil spring 112 through a loop-shaped connecting part 113a obtained by forming its end into a loop for catching the connecting part 112c of the coil spring 112, covering the end of the loop with a cylindrical sleeve 114a and flattening the sleeve 114a. The other end of the wire 113 is provided with a loop part 113b obtained by similarly forming a loop, covering the end of the loop with a cylindrical sleeve 114b and flattening the sleeve 114b. It is noted that the wire 113 has a length appropriately set in accordance with the place for mounting the supported member and the positional relationship between the place and a supporting member.

Assuming, for example, that the supported member has a weight of approximately 1 kg and that a distance between the place for mounting the supported member and the supporting member is approximately 600 mm, the fall preventing member 101 is set as follows: A length between the connecting part 113a and the loop part 113b of the wire 113 is set to approximately 600 mm, and the strength of the wire 113 is set to rigidity sufficient for minimally allowing plastic deformation when the supported member freely falls by approximately 600 mm. Furthermore, the initial tension of the coil spring 112 is set to 1 kg or more.

When the loop part 113b of the wire 113 is caught by the supporting member such as a beam provided in a ceiling space and the fall preventing member 101 is allowed to pass through the loop part 113b of the wire 113 from the opposite side, the fall preventing member 101 having the aforementioned structure may be simply and definitely fixed on the supporting member as more firmly as more tension is applied without providing a special fixing mechanism. When the supported member is caught by the catching part 111a of the hook 111 provided on the other end of the fall preventing member 101, the supported member may be supported by the supporting member. When the supported member falls from the place it is mounted such as a ceiling board under this condition, a force in accordance with potential energy of the supported member is applied to the fall preventing member 101. Due to the applied force, the coil spring 112 is mainly stretched, so that the fall of the supported member may be limited to a distance depending upon the characteristic of the coil spring 112 (hereinafter referred to as the distance x). Assuming that the whole potential energy obtained before the fall is converted into the deformation of the coil spring, the distance x is obtained as (2 mgh/k)^{0.5} (wherein m indicates mass, g indicates gravitation acceleration, h indicates a height of the fall and k indicates a spring constant). When the fall is restricted so as to prevent the supported member from colliding with the floor, a large force is applied to the fall preventing member 101, and when the coil spring 112 is appropriately set in accordance with the supported member, the shock caused in restricting the fall of the supported member may be absorbed as energy consumed in stretching or irreversible deformation of the coil spring 112, and hence, the force applied to the hook 111 may be made small. As a result, the catching part 111a and the holding part 111c of the hook 111 may be prevented from being separated from each other so as to prevent release of the engagement between the supported member and the hook 111, and thus, the supported member may be supported by the supporting member without allowing it to fall down to the floor.

Furthermore, since the coil spring 112 is provided on the other side of the wire 113, when the fall preventing member 101 is attached to the supporting member such as a beam provided in a ceiling space, the spring coil 112 does not obstruct the attachment but the attachment may be easily performed, and in addition, the state (including deformation or damage) of the coil spring 112 may be easily checked from the inside of the room. Moreover, since the coil spring 112 is used as the shock absorbing means, the shock caused in restricting the fall of the supported member may be absorbed with a simple structure using the coil spring 112 alone.

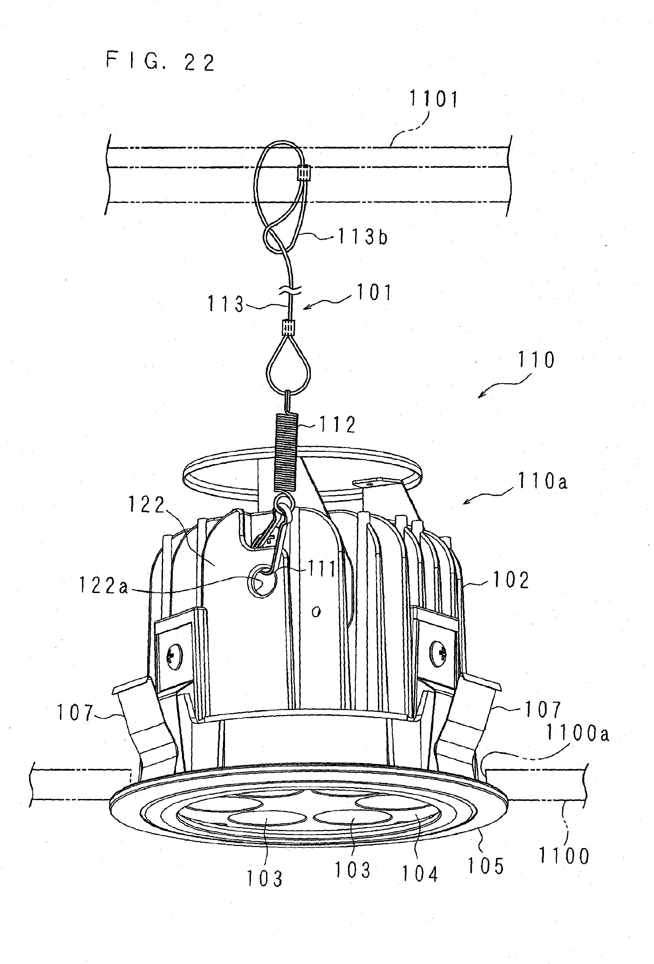

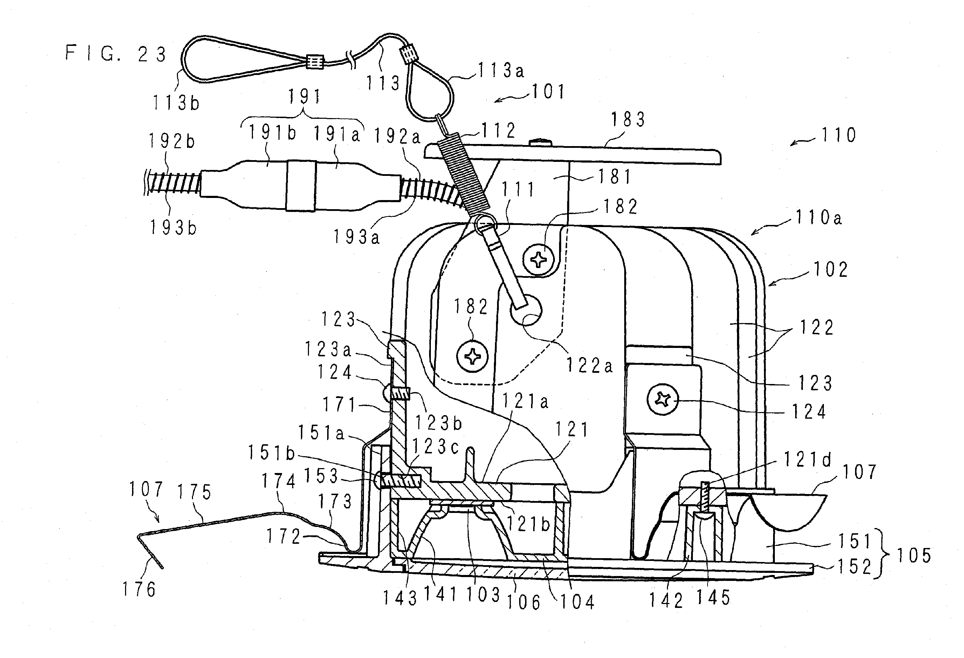

This fall preventing member 101 is used for preventing, for example, a lighting apparatus such as a downlight mounted in a mounting hole formed in a ceiling board from falling down to the floor. Now, such a lighting apparatus will be described by exemplifying a downlight provided on a ceiling board for locally lighting a room. FIG. 22 is a perspective outside view of a lighting apparatus 110 including the fall preventing member 101 of Embodiment 5. FIG. 23 is a schematic side view of the lighting apparatus 110, a part of which is illustrated as a partial cross-sectional view.

In these drawings, a reference numeral 110a denotes a lighting apparatus main body. The lighting apparatus main body 110a includes a radiator 102 made of a metal such as aluminum. The radiator 102 includes a heat transfer plate 121 in a substantially disc shape as illustrated in FIG. 23. On a first face 121a of the heat transfer plate, a plurality of heat sinking plates 122 each in the shape of a rectangular plate are provided to stand in parallel to one another. On the first face 121a of the heat transfer plate, a connecting plate (not shown) is provided to extend through substantially the centers of the plurality of heat sinking plates 122 perpendicularly to the heat sinking plates 122.

A plurality of tapped holes 121d are provided in a peripheral portion of the heat transfer plate 121. Furthermore, attaching parts 123 each in the shape of a rectangular plate are provided in the peripheral portion of the heat transfer plate 121 of the radiator 102 to be perpendicular to the radial direction of the heat transfer plate 121 and stand in three positions at equal intervals along the circumferential direction. Each of the attaching parts 123 is connected to and integrated with a plurality of heat sinking plates 122, and one of the attaching parts 123 is disposed to be connected to the heat sinking plates 122 at right angles. The outer face 123a of each attaching part 123 is formed as a flat face. Tapped holes 123b and 123c are formed in upper and lower portions of each attaching part 123. Incidentally, the radiator 102 may be integrally formed by die casting or may be formed by cutting. Alternatively, it may be formed by combining a plurality of members obtained by extrusion.

On a second face 121b of the heat transfer plate 121 of the radiator 102, a plurality of (specifically six in the drawings) LED modules 103 working as light sources are provided at equal intervals along the circumferential direction. Each of the LED modules 103 includes a rectangular substrate of ceramic (such as aluminum oxide); a light emitting part having a plurality of (for example, 36) LED devices collectively packaged at the center of one face of the ceramic substrate and an encapsulating resin, for encapsulating the plurality of LED devices, containing a phosphor dispersed therein; and an input terminal and output terminal. It is noted that a heat conduction sheet or grease is preferably provided between the LED modules 103 and the heat transfer plate 121. Heat generated from the LED modules 103 in turning on the LED modules 103 is transferred to the heat transfer plate 121, the heat sinking plates 122 and the connecting plate of the radiator 102, so as to be externally released through natural convection.

A reflector plate 104 is provided on the side of the second face 121b of the heat transfer plate 121 of the radiator 102. On the reflector plate 104, a plurality of reflecting parts 141 each having a substantially hemispherical recess are formed in positions corresponding to the LED modules 103 so as to surround the corresponding LED modules 103 when the reflector plate 104 is attached to the radiator 102. The reflector plate 104 is made of a metal such as stainless steel, a metal coated with a coating having high reflectance, a microcellular foam light reflecting material having optical characteristics of high reflectance (of approximately 98%) and high diffuse reflectance (of approximately 95%) (such as MCPET (registered trademark)), or a resin material (such as polycarbonate) packed with a material of a metal oxide (such as titanium dioxide) or the like having a light scattering property.

The reflector plate 104 is provided with fixing parts 142 each having a substantially cylindrical recess in positions corresponding to the tapped holes 121d of the heat transfer plate 121 when the reflector plate 104 is attached to the radiator 102. Furthermore, a peripheral wall 143 is provided to stand at the periphery of the reflector plate 104. The reflector plate 104 is fixed on the radiator 102, with the end face of the peripheral wall 143 kept in contact with the heat transfer plate 121, by inserting screws 145 into through holes formed in the fixing parts 142 of the reflector plate 104 and screwing them into the tapped holes 121d provided in the heat transfer plate 121. Light emitted from the LED modules 103 is reflected by the reflecting parts 141 of the reflector plate 104, so as to have an angle against the optical axis of each LED module 103 not more than a predetermined angle. As a result, the lighting apparatus 110 emits light controlled in its luminous intensity distribution characteristic so as to have high luminance in a position directly below the lighting apparatus 110.

A decorative frame 105 is provided on the side of the heat transfer plate 121 of the radiator 102. The decorative frame 105 includes a cylindrical part 151 and a ring-shaped flange 152 extended from one end of the cylindrical part 151 in a perpendicular direction along the radial direction. The cylindrical part 151 has extended parts 151a extended in a direction opposite to the flange 152 from three positions along the circumferential direction The extended parts 151a are provided with through holes 151b. It is noted that the through holes 151b are provided in positions corresponding to the tapped holes 123c provided in the attaching parts 123 of the radiator 102 when the decorative frame 105 is attached to the radiator 102. This decorative frame 105 is fixed on the radiator 102 by fitting the reflector plate 104 in the other end of the cylindrical part 151, inserting screws 153 into the through holes 151b with the extended parts 151a kept in contact with the outer face 123a of the attaching parts 123 of the radiator 102 and screwing the screws 153 into the tapped holes 123c. On the inner face of the flange 152 of the decorative frame 105, a transparent plate 106 made of a resin in a disc shape is provided so as to cover the LED modules 103. The transparent plate 106 is made of, for example, a polycarbonate resin.

Furthermore, a plurality of flat springs 107 are provided on the radiator 102. Each flat spring 107 is made of a metal such as stainless steel and is formed into a V-shape as illustrated in FIG. 23 by bending a long and narrow rectangular plate. Each flat spring 107 has an attaching part 171 in the shape of a rectangular plate provided on one side thereof. On the other side of the flat spring 107 beyond a bent part 172, a first pressing part 173 and a second pressing part 174 each having an arc-shaped cross-section along the lengthwise direction of the flat plate 107 are connectively provided. Furthermore, the end of the flat spring 107 on the latter side is provided with a hook part 176 formed by bending the rectangular plate at an end of an arm part 175 connected to the second pressing part 174 at an angle against the arm part 175 toward the opposite direction to the attaching part 171.

These flat springs 107 are fixed on the radiator 102 in three positions at equal intervals along the circumferential direction, with the attaching parts 171 of the flat springs 107 kept in close contact with the outer faces 123a of the attaching parts 123, by inserting screws 124 into through holes formed in the attaching parts 171 of the flat springs 107 and screwing them into the tapped holes 123b formed in the attaching parts 123 of the radiator 102. It is noted that the hook part 176 of the flat spring 107 is provided for preventing fall of the lighting apparatus 110 when the first pressing part 173 and the second pressing part 174 of the flat spring 107 are not in contact with the ceiling board.

Furthermore, the heat sinking plates 122 disposed outside the radiator 102 are provided with catching holes 122a. The fall preventing member 101 of the invention described above is attached to one of the catching holes 122a provided in the heat sinking plates 122. Owing to this fall preventing member 101, the lighting apparatus 110 may be prevented from falling down to the floor as described later.

An attaching plate 181 is fixed with a screw 182 on each of the heat sinking plates 122 disposed in the second positions from the outside of the radiator 102 so as to be parallel to the heat sinking plates 122. A circular plate 183 is provided on the attaching plates 181 at right angles against the attaching plates 181. This circular plate 183 may prevent foreign substances such as dust and a waterdrop from entering the lighting apparatus main body 110a, particularly a space between the heat sinking plates 122, so as to suppress degradation of the radiating performance of the radiator 102. Furthermore, when a waterdrop drops onto the ceiling board 1100 due to water leakage from the upstairs, the waterdrop may be prevented from entering the lighting apparatus main body 110a.

At this point, the circular plate 183 will be described. The circular plate 183 is provided above the radiator 102 for preventing foreign substances such as dust and a waterdrop from entering a space between the heat sinking plates 122 of the radiator 102, and it is preferred that the circular plate 183 has a diameter smaller than the outer diameter of the radiator 102 and that the circular plate 183 is positioned inside the outer circumference of the radiator 102 when the lighting apparatus main body 110a is seen from the above (namely, from the side opposite to the face having the LED modules 103). Thus, the circular plate 183 may be prevented from coming into contact with the inner face of a mounting hole in inserting the lighting apparatus main body 110a into the mounting hole formed in a ceiling board from the underside of the ceiling board as described later, and therefore, the lighting apparatus main body 110a may be easily mounted on the ceiling board.

A power unit (not shown) including various circuit components such as a transformer, a resistor and a capacitor is provided outside the lighting apparatus main body 110a. The power unit is connected to the LED modules 103 through lead wires (not shown) and connectors (not shown). A connector cover 191 for protecting the connectors includes a first cover part 191a and a second cover part 191b capable of housing a male connector and a female connector respectively therein. When the first cover part 191a and the second cover part 191b are integrally connected to each other, the connectors are housed in the connector cover 191. Thus, the connectors may be protected from a noxious animal such as a rat.

Lead wires extending between the LED modules 103 and the first cover part 191a and lead wires extending between the second cover part 191b and the power unit are respectively brought together by protection tubes 192a and 192b, and metal protection springs 193a and 193b are respectively externally fit on the outer circumferences of the protection tubes 192a and 192b. Thus, the lead wires may be prevented from being gnawed by a noxious animal such as a rat.

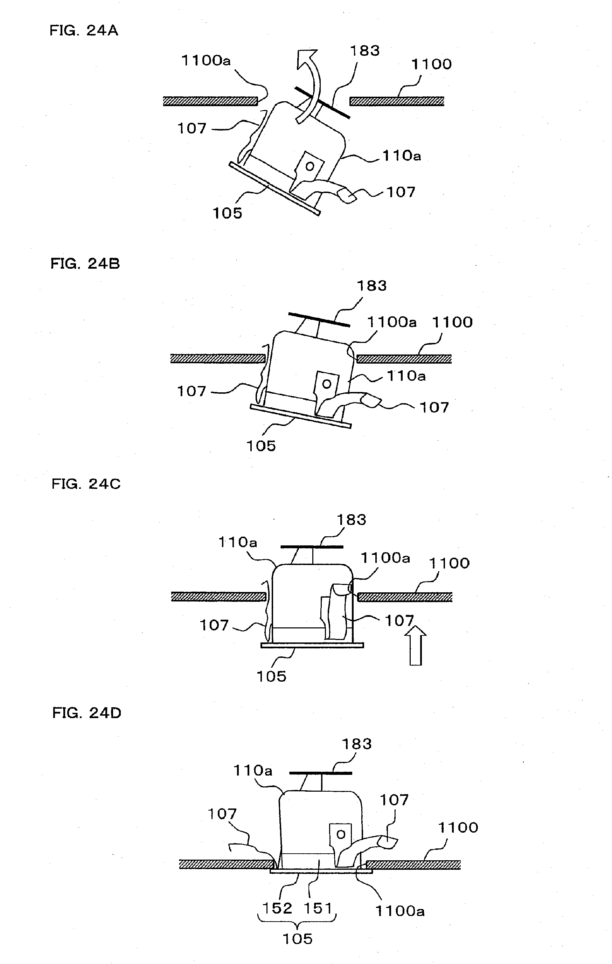

The lighting apparatus 110 having the aforementioned structure is fixed in a mounting hole 1100a formed in a ceiling board 1100 with the flat springs 107 with the side of the transparent plate 106 disposed underside, so as to be used as what is called a downlight. Now, procedures for attaching the lighting apparatus 110 will be described. FIGS. 24A through 24D are diagrams explaining the procedures for attaching the lighting apparatus main body 110a in the mounting hole 1100a of the ceiling board 1100.

First, the side of the loop part 113b of the wire 113 of the fall preventing member 101 is put on a beam 1101 disposed in a ceiling space, that is, the supporting member, and the fall preventing member 101 is allowed to pass through the loop part 113b of the wire 113, so that the fall preventing member 101 may be fixed on the beam 1101 as illustrated in FIG. 22. Next, one of the catching holes 122a is caught by the hook 111 of the fall preventing member 101. In this manner, the fall preventing member 101 may support the lighting apparatus main body 110a by hanging it on the beam 1101. Under this condition, the lighting apparatus main body 110a is inserted into the mounting hole 1100a formed in the ceiling board 1100 from the underside of the ceiling board 1100 as illustrated with a white arrow in the drawing with the arm parts 175 of the flat springs 107 pressed against the lighting apparatus main body 110a and with the lighting apparatus main body 110a slightly inclined as illustrated in FIG. 24A. Thereafter, the circular plate 183 provided above the radiator 102 is made to pass through the mounting hole 1100a as illustrated in FIG. 24B. Subsequently, with the flat springs 107 released, the lighting apparatus main body 110a is moved upward as illustrated with the white arrow in the drawing, so as to further push it into the mounting hole 1100a as illustrated in FIG. 24C. Under this condition, either the first pressing parts 173 or the second pressing parts 174 of the flat springs 107 are pushed against the upper edge of the mounting hole 1100a of the ceiling board 1100 owing to a force applied due to the plastic deformation of the flat springs 107. As a result, a downward force is applied to the ceiling board 1100, and hence, an upward force is applied to the decorative frame 105 by the flat springs 107 as a reaction of the downward force, so that the upper face of the flange 152 may be brought into close contact with the lower face of the ceiling board 1100, and the lighting apparatus 110 is fixed in the mounting hole 1100a of the ceiling board 1100 as illustrated in FIG. 24D.

The lighting apparatus 110 thus fixed may fall from the ceiling board 1100, at the time of a disaster such as an earthquake, because the hook parts 176 cannot hold the lighting apparatus main body 110a or because the ceiling board 1100 is damaged. At this point, the coil spring 112 of the fall preventing member 101 may absorb a shock caused in restricting the fall so as not to allow the lighting apparatus main body 110a to collide with the floor, and therefore, the force applied to the hook 111 may be made small. As a result, the catching part 111a and the pressing part 111c of the hook 111 are prevented from being separated from each other so as not to release the engagement between the lighting apparatus main body 110a and the hook 111 by using the shock absorbing means with a simple structure using the coil spring 112 alone, and therefore, the lighting apparatus main body 110a may be prevented from falling down to the floor by supporting the lighting apparatus main body 110a hung on the beam 1101.

Furthermore, the lighting apparatus 110 of the invention uses LEDs with small weight and size as the light sources, and the radiator 102 made of aluminum occupies a large ratio in the whole weight of the lighting apparatus 110. Since the lighting apparatus main body 110a is caught on the catching body 111 of the fall preventing member 101 through the catching hole 122a provided in the radiator 102 so as to support and hang the lighting apparatus main body 110a on the beam 1101 with the wire 113, swing, damage and the like of the lighting apparatus main body 110a caused when hung may be suppressed.

### (EMBODIMENT 6)

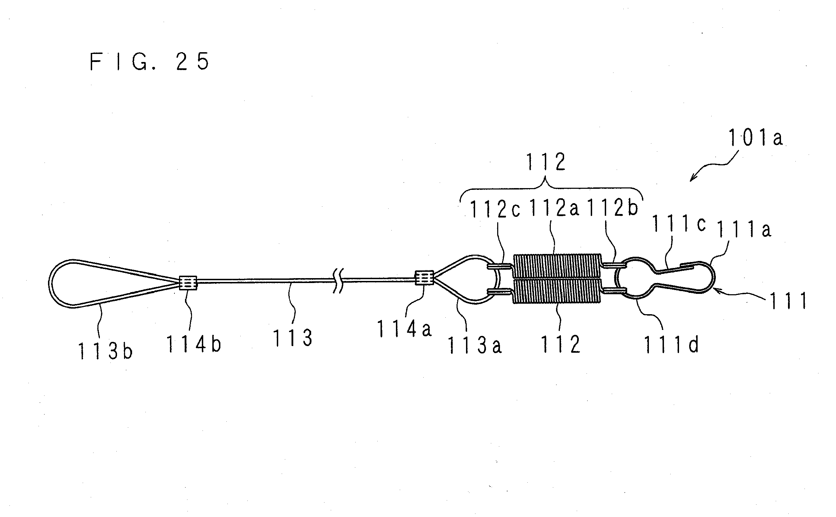

FIG. 25 is a schematic plan view of a fall preventing member according to Embodiment 6 of the invention. The fall preventing member 101a of this embodiment includes, as shock absorbing means, two coil springs 112 working as a shock absorber. The two coil springs 112 are connected in parallel between a loop-shaped connecting part 113a of a wire 113 of the fall preventing member 101 and a connecting part 111d of a hook 111. The rest of the structure is the same as that of Embodiment 5 illustrated in FIG. 20, and hence, like reference numerals are used to refer to like elements illustrated in FIG. 20 so as to omit the detailed description of the structure.

In the fall preventing member 101a having the aforementioned structure, the coil springs 112 of the fall preventing member 101a may absorb a shock caused in restricting the fall of a supported member for preventing it from colliding with the floor in the same manner as in the fall preventing member 101 of Embodiment 5 described above, and hence, the force applied to the hook 111 may be made small. As a result, a catching part 111a and a pressing part 111c of the hook 111 are prevented from being separated from each other so as not to release the engagement between the supported member and the hook 111 by using the shock absorbing means with a simple structure using the coil springs 112 alone, and therefore, the supported member may be prevented from falling down to the floor by supporting the supported member hung on a supporting member.

Since the two coil springs 112 are provided in parallel, even if one of them is damaged, the remaining one may function as the shock absorbing means. Furthermore, when coil springs having different characteristics are used as the coil springs 112, for example, for making the coil springs 112 function in a stepwise manner as the shock absorbing means, the degree of shock absorbance attained by the fall preventing member 101a may be appropriately set in accordance with the place for mounting the supported member.

The fall preventing member 101a of this embodiment is applicable to the lighting apparatus 110 in the same manner as the fall preventing member 101 of Embodiment 5, and the lighting apparatus main body 110a may be prevented from falling down to the floor by supporting and hanging the lighting apparatus main body 110a hung on a beam 1101 with the release of the engagement between the lighting apparatus main body 110a and the hook 111 prevented. Furthermore, since the catching body 111 of the fall preventing member 101a is caught by the catching hole 122a provided in the radiator 102, swing, damage and the like of the lighting apparatus main body 110a when hung may be suppressed.

Although the two coil springs 112 are used in this embodiment, the number of coil springs is not limited to two but may be three or more.

### (EMBODIMENT 7)

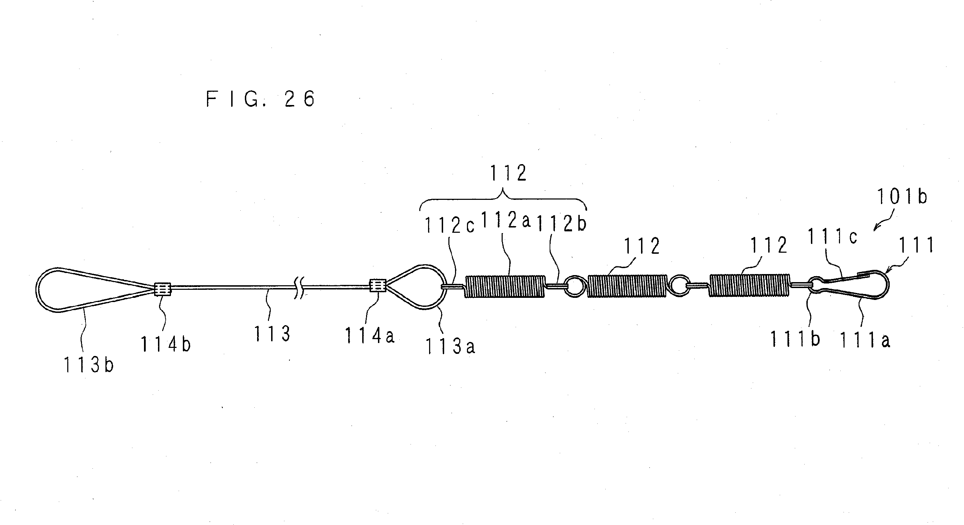

FIG. 26 is a schematic plan view of a fall preventing member according to Embodiment 7 of the invention. The fall preventing member 101b of this embodiment includes, as shock absorbing means, three coil springs 112 working as a shock absorber. The three coil springs 112 are connected in series between a loop-shaped connecting part 113a of a wire 113 of the fall preventing member 101b and a connecting part 111d of a hook 111. The rest of the structure is the same as that of Embodiment 5 illustrated in FIG. 20, and hence, like reference numerals are used to refer to like elements illustrated in FIG. 20 so as to omit the detailed description of the structure.

In the fall preventing member 101b having the aforementioned structure, the coil springs 112 of the fall preventing member 101b may absorb a shock caused in restricting the fall of a supported member for preventing it from colliding with the floor in the same manner as in the fall preventing member 101 of Embodiment 5 described above, and hence, the force applied to the hook 111 may be made small. As a result, a catching part 111a and a pressing part 111c of the hook 111 are prevented from being separated from each other so as not to release the engagement between the supported member and the hook 111 by using the shock absorbing means with a simple structure using the coil springs 112 alone, and therefore, the supported member may be prevented from falling down to the floor by supporting the supported member hung on a supporting member.

Since the three coil springs 112 are provided in series, when coil springs having different characteristics are used as the coil springs 112, for example, for making the coil springs 112 function in a stepwise manner as the shock absorbing means, the degree of shock absorbance attained by the fall preventing member 101b may be appropriately set in accordance with the place for mounting the supported member.

The fall preventing member 101b of this embodiment is applicable to a lighting apparatus in the same manner as the fall preventing member 101 of Embodiment 5, and the lighting apparatus main body 110a may be prevented from falling down to the floor by supporting and hanging the lighting apparatus main body 110a on the beam 1101 with release of the engagement between the lighting apparatus main body 110a and the hook 111 prevented. Furthermore, since the catching body 111 of the fall preventing member 101b is caught by the catching hole 122a provided in the radiator 102, swing, damage and the like of the lighting apparatus main body 110a when hung may be suppressed.

Although the three coil springs 112 are used in this embodiment, the number of coil springs is not limited to three but may be two, or four or more.

A plurality of coil springs are provided in parallel in Embodiment 6 and a plurality of coil springs are provided in series in Embodiment 7, and the structures of these embodiments may be combined with each other.

### (EMBODIMENT 8)

The coil springs are used as the shock absorbing means of the fall preventing member in the aforementioned embodiments, and the shock absorbing means is not limited to the coil springs.

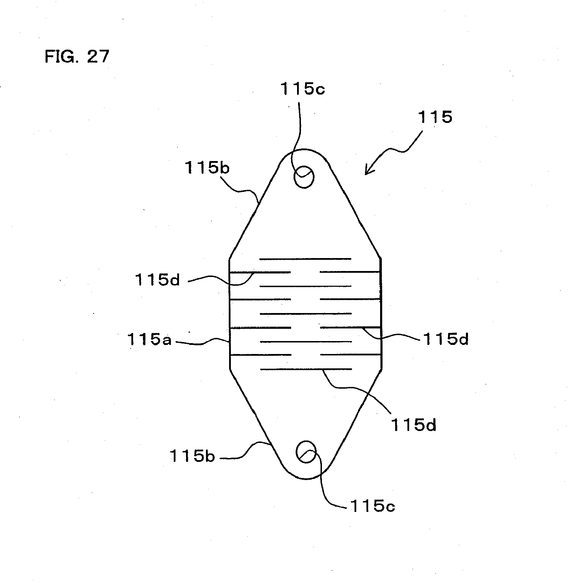

FIG. 27 is a schematic diagram of another shock absorbing means.

In this drawing, a reference numeral 115 denotes a plate spring including a rectangular spring part 115a and triangular attaching parts 115b extended from both ends of the spring part 115a and provided with attaching holes 115c. The plate spring 115 is made of a metal such as stainless steel. The spring part 115a is provided with a plurality of slits 115d extending in a direction perpendicular to the lengthwise direction of the plate spring 115 as illustrated in FIG. 27. This plate spring 115 is used instead of the coil spring of the fall preventing member according to each of Embodiments 5 through 7. For example, in the fall preventing member of Embodiment 5 illustrated in FIG. 20, the plate spring 115 is used instead of the coil spring 112 to be connected to the hook 111 and the wire 113 with the attaching holes 115c caught by the connecting part 111b of the hook 111 and the connecting part 113a of the wire 113.

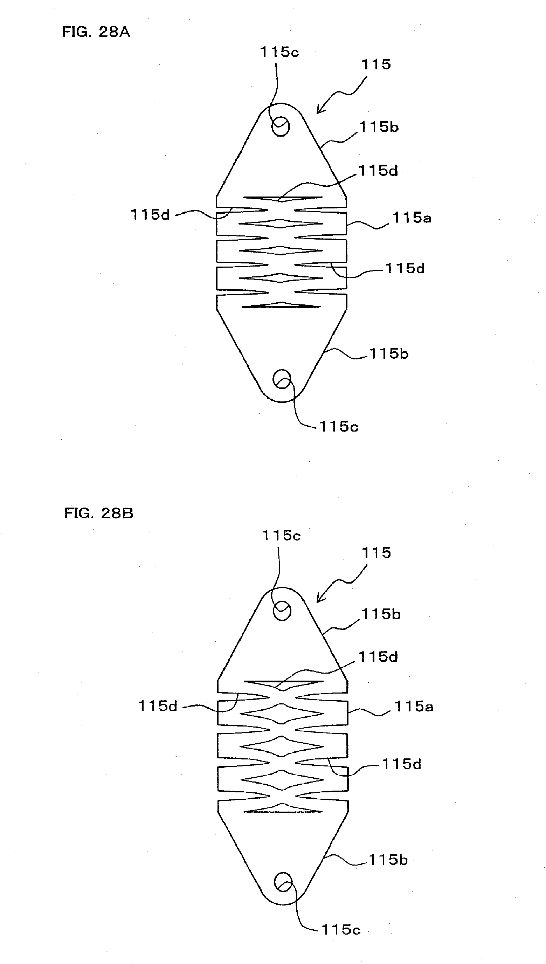

In this structure, a force is applied to the plate spring 115 in accordance with a shock applied to the fall preventing member in restricting the fall of the supported member. FIGS. 28A and 28B are explanatory diagrams illustrating an operation of the plate spring 115. FIG. 28A illustrates the operation performed when the shock applied to the fall preventing member is small and FIG. 28B illustrates the operation performed when the shock applied to the fall preventing member is large.

In an initial state where no force is applied to the plate spring 115, the slits 115d provided in the spring part 115a are closed as illustrated in FIG. 27. When a force is applied to the plate spring 115 in accordance with a shock applied to the fall preventing member in restricting the fall of the supported member, larger stress is applied to the spring part 115a because of the slits 115d than to the attaching parts 115b. The spring part 115a is elongated under this stress and the slits 115d are opened, and the plate spring 115 is placed in the state illustrated in FIG. 28A. At this point, the deformation of the spring part 115a is elastic deformation. Therefore, when the force applied to the plate spring 115 is removed, the spring part 115a is restored to the state illustrated in FIG. 27. When a larger force is applied to the plate spring 115, the spring part 115a is further elongated and the slits 115d are more widely opened, and the plate spring 115 is placed in the state illustrated in FIG. 28B. At this point, the deformation of the spring part 115a is plastic deformation. Therefore, even when the force applied to the plate spring 115 is removed, the spring part 115a is not restored to the state illustrated in FIG. 27.

In this manner, when the shock applied to the fall preventing member is small, the shock is absorbed through the elastic deformation of the plate spring 115, and when the shock applied to the fall preventing member is large, the shock may be absorbed by positively consuming the kinetic energy generated by the fall of the supported member through the plastic deformation of the plate spring 115. Therefore, the shock caused in restricting the fall of the supported member for preventing it from colliding with the floor may be sufficiently absorbed, and the force applied to the hook 111 may be made small. As a result, the catching part 111a and the pressing part 111c of the hook 111 are prevented from being separated from each other so as not to release the engagement between the supported member and the hook 111 by using the shock absorbing means with a simple structure using the plate spring 115 alone, and therefore, the supported member may be prevented from falling down to the floor by supporting the supported member hung on a supporting member.

The fall preventing member including the spring of this embodiment is applicable to a lighting apparatus in the same manner as the fall preventing member of each of Embodiments 5 through 7, and the lighting apparatus main body 110a may be prevented from falling down to the floor by supporting and hanging the lighting apparatus main body 110a on a beam 1101 with release of the engagement between the lighting apparatus main body 110a and the hook 111 prevented. Furthermore, since the catching body 111 of the fall preventing member 101a is caught by the catching hole 122a provided in the radiator 102, swing, damage and the like of the lighting apparatus main body 110a when hung may be suppressed.

Although merely one plate spring 115 is used in this embodiment, the invention is not limited to this, but a plurality of springs may be provided in parallel as in the fall preventing member of Embodiment 6, a plurality of springs may be provided in series as in the fall preventing member of Embodiment 7, or the structures of these embodiments may be combined with each other.

Incidentally, a coil spring or a plate spring having a plurality of slits formed in a direction crossing its extending direction is used as the shock absorbing means of the fall preventing member in each of Embodiments 5 through 8 described above, which does not limit the invention, and any member may be used as far as it may absorb a shock applied to the fall preventing member. Furthermore, the shock absorbing means may be made of a shape memory alloy. In this case, even when the shock absorbing means is deformed by absorbing a shock applied to the fall preventing means, the shape is restored to a state attained before the deformation, and hence, the shock absorbing means may be repeatedly used.

Moreover, although the shock absorbing means and the hook are separately formed in each of Embodiments 5 through 8 described above, they may be integrally formed.

Furthermore, the wire and/or the shock absorbing means of each of Embodiments 5 through 8 described above may be coated with a resin, so as to further absorb the shock through deformation or the like of the resin.

The wire, the shock absorbing means and the hook of the fall preventing member are made of a metal in each of Embodiments 5 through 8 described above, which does not limit the invention, and they may be made of a resin or a reinforced resin including glass fiber or carbon fiber. Furthermore, a mechanism for preventing twist, such as a swivel, may be additionally provided in the middle of the fall preventing member.

The beam provided in the ceiling space is exemplarily described as the supporting member in each of Embodiments 5 through 8 described above, which does not limit the invention, and the supporting member may be a power unit for the lighting apparatus installed in a ceiling space. Since the power unit is fixed to be connected to a power line provided in the ceiling space, when the lighting apparatus main body corresponding to the supported member is connected to the power unit through the fall preventing member, the aforementioned effects may be attained.

When the power unit is thus used as the supporting member, the fall preventing member of each of Embodiments 5 through 8 may be used as the fall preventing member. Alternatively, a fall preventing member including, as a shock absorbing member, a bent wire formed by bending a wire for absorbing a shock through expansion/contraction or irreversible deformation of a bent portion of the wire may be used.

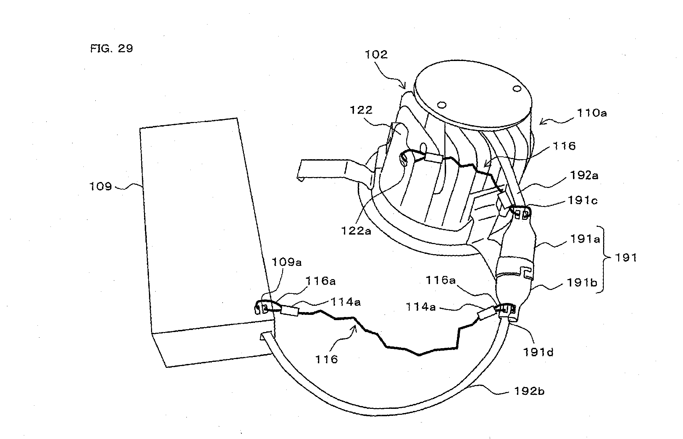

FIG. 29 is a diagram illustrating an example where a lighting apparatus main body 110a and a power unit are connected by using bent wires as the fall preventing member. In this drawing, a reference numeral 116 denotes a bent wire formed by bending a wire for absorbing a shock through expansion/contraction or irreversible deformation of a bent portion of the wire. A first cover part 191a and a second cover part 191b of a connector cover 191 and a power unit cover of a power unit 109 are provided with through holes 191c, 191d and 109a for allowing the wires to pass therethrough. One of the bent wires 116 connects a radiator 102 of the lighting apparatus main body 110a to the connector cover 191 through connecting parts 116a, each of which is obtained by forming a loop with its end for catching a catching hole 122a provided in a heat sinking plate 122 of the radiator 102 or the through hole 191c provided in the first cover part 191a and by covering the end of the loop with a cylindrical sleeve 114a. The other of the bent wires 116 connects the connector cover 191 to the power unit 109 through connecting parts 116a, each of which is obtained by forming a loop with its end for catching the through holes 191d and 109a respectively provided in the second cover part 191b and the power unit cover of the power unit 109 and by covering the end of the loop with a cylindrical sleeve 114a.

When this structure is employed, even if the lighting apparatus main body 110a is to fall off from the mounting hole of the ceiling board, the bent wires 116 themselves function as the shock absorbing member, so as to support and hang the lighting apparatus for preventing it from colliding with the floor. More specifically, since the bent wires 116 expand in their bent portions, a shock applied to the fall preventing member or applied to the catching parts of the fall preventing member attached to the radiator 102, the connector cover 191 and the power unit 109 may be absorbed.

Furthermore, in the case where the bent wires 116 are used as the fall preventing member, the lengths attained by expanding the bent portions of the bent wires 116 are preferably smaller than the lengths of cables 192a and 192b extended between the light apparatus main body 110a and the connector cover 191 and between the connector cover 191 and the power unit 109, respectively. Thus, the shock caused in the fall may be prevented from being applied to the cables 192a and 192b. It is noted that the lighting apparatus main body 110a and the power unit 109 may be directly connected through a bent wire.

Furthermore, in each of Embodiments 5 through 8, the protection tubes and the protection springs are provided for protecting the lead wires connecting the power unit to the LED modules 103, and the fall preventing member is separately provided. Instead, the lead wires and the protection members for the lead wires may be appropriately set so as to also work as the fall preventing member. In this case, as the protection tube for bringing the lead wires together, a flexible member such as a spring cable may be used, with predetermined rigidity provided to the spring cable.

Moreover, the LED modules 103 each including a plurality of packaged LED devices are used as the light sources of the lighting apparatus in each of Embodiments 5 through 8, which does not limit the invention, and an LED chip with high luminance, an EL (Electro Luminescence), a fluorescent lamp, a light bulb or the like may be used.

The downlight is described as an example of the lighting apparatus in each of Embodiments 5 through 8, which does not limit the invention, and the fall preventing member of this invention is applicable to other types of lighting apparatuses. The invention is applicable to, for example, a ceiling light provided on a ceiling board and having a flat rectangular parallelepiped shape for illuminating the whole room. In this case, the catching body of the fall preventing member is preferably attached to the heaviest member of a lighting apparatus main body, and in accordance with the dimension of the lighting apparatus main body, a plurality of portions (such as diagonally opposing two corners out of four corners on the upper face of the lighting apparatus main body) are preferably caught by the catching body of the fall preventing member.

Moreover, the present invention is applicable not only to a lighting apparatus but also to any equipment other than a lighting apparatus mounted on a ceiling board such as an air conditioner and a security camera. In addition, the invention is similarly applicable to equipment, such as a lighting apparatus, mounted not only on a ceiling board but also on any mounting face such as a wall.

In the middle of a power line connecting electric equipment such as the lighting apparatus of any of the embodiments and a power supply for supplying power to the electric equipment, mutually connected connectors are generally provided as described above. A connector cover capable of protecting connectors with an easily attachable/removable structure will now be described in detail.

### (EMBODIMENT 9)

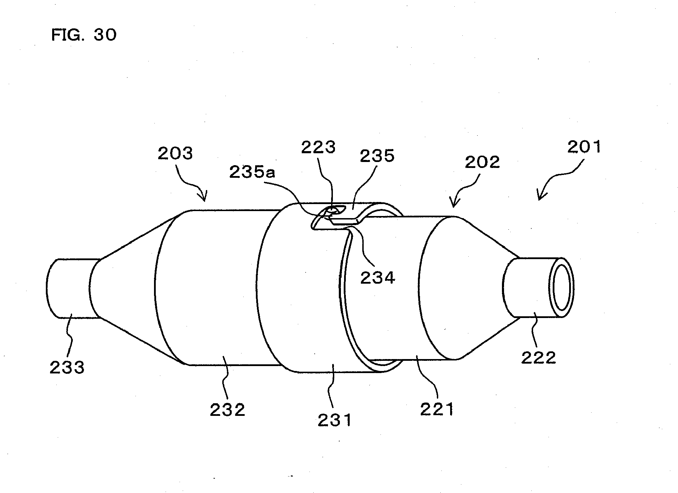

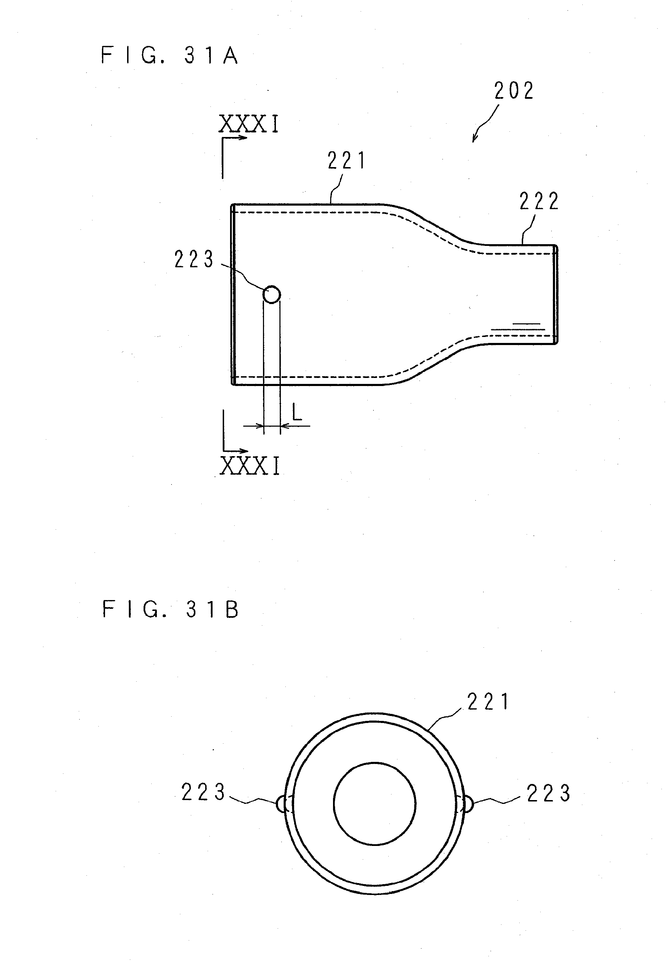

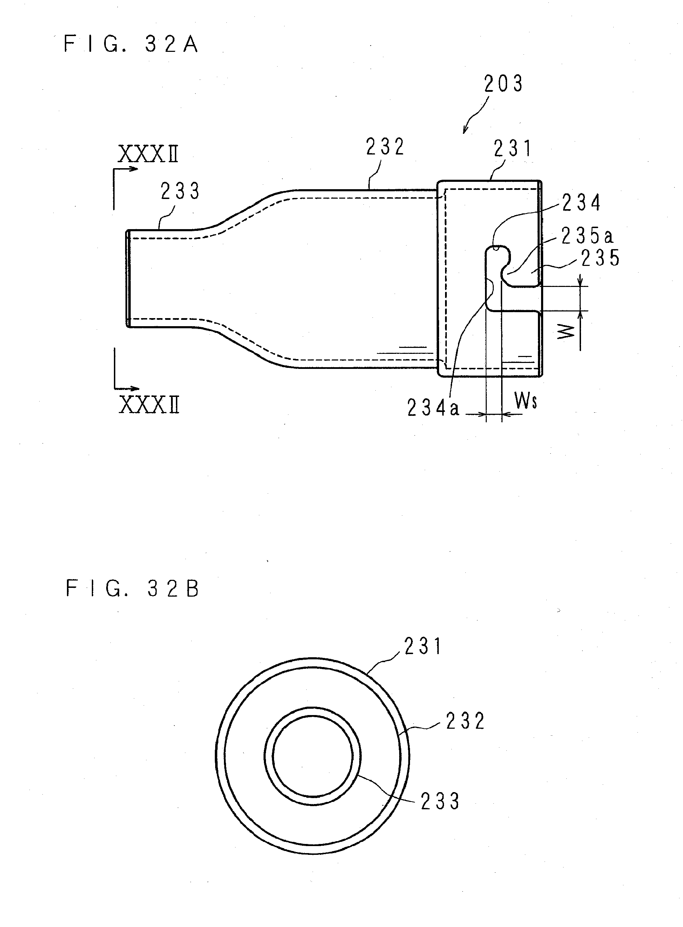

FIG. 30 is a schematic perspective outside view of a connector cover 201 according to Embodiment 9 of the invention. The connector cover 201 housing connectors therein for protecting the connectors includes a first cover part 202 and a second cover part 203 partly externally fit on the first cover part 202. FIGS. 31A and 31B are schematic outside views of the first cover part 202. FIG. 31A is a front view thereof and FIG. 31B is a diagram taken from a direction of arrows XXXI-XXXI of FIG. 31A. FIGS. 32A and 32B are schematic outside views of the second cover part 203. FIG. 32A is a front view thereof and FIG. 32B is a diagram taken from a direction of arrows XXXII-XXXII of FIG. 32A.

The first cover part 202 includes a cylindrical part 221 having a cylindrical shape for housing at least a part of a connector and engaging with the second cover part 203 at an end portion on one side; and a holding part 222 connected to the other side of the cylindrical part 221 and externally holding a power line such as a lead wire or a protection tube for the power line having the connector provided at its end. It is noted that a connecting portion between the cylindrical part 221 and the holding part 222 has a diameter continuously reduced along a direction from the cylindrical part 221 to the holding part 222.

The cylindrical part 221 is provided with projections 223 each projecting in a hemispherical shape disposed in two positions at equal intervals along the circumferential direction as illustrated in FIG. 31B. It is noted that each projection 223 has an appropriate length L along the axial direction so as to be engaged with engaging means provided in the second cover part 203 described later.

The holding part 222 connected to the side of the cylindrical part 221 is in a cylindrical shape with a smaller diameter than the cylindrical part 221. Incidentally, the diameter of the cylindrical part 221 is determined in accordance with the dimension of the connector housed therein, and the diameter of the holding part 222 is determined in accordance with the diameter of the power line or the protection tube for the power line.

The second cover part 203 includes a cylindrical part 231 having a cylindrical shape and externally fit on the cylindrical part 221 of the first cover part 202 at an end on one side; a housing part 232 connected to the other side of the cylindrical part 231 and housing at least a part of a connector; and a holding part 233 connected to the housing part 232 on the opposite side to the cylindrical part 231 and externally holding a power line such as a lead wire or a protection tube for the power line having the connector provided at one end thereof. It is noted that a connecting portion between the housing part 232 and the holding part 233 has a diameter continuously reduced in a direction from the housing part 232 to the holding part 233.

The inner diameter of the cylindrical part 231 is larger than the outer diameter of the cylindrical part 221 of the first cover part 202. On the edge of the cylindrical part 231, notches 234 each in a substantially L shape having an end opened on the edge of the cylindrical part 231 are provided in two positions at equal intervals along the circumferential direction as illustrated in FIG. 32A. Each of the notches 234 is formed so as to have one side extending along the axial direction of the cylindrical part 231 and another side extending along the circumferential direction at a distance from the edge of the cylindrical part 231. Each of the notches 234 is provided with a narrow portion 234a having a smaller width Ws than a width W of the other portion (i.e., Ws < W). The width Ws of the narrow portion 234a of the notch 234 is slightly smaller than the length L along the axial direction of the projection 223 (i.e., Ws < L). It is noted that the length L along the axial direction of each projection 223 is smaller than the width W of the other portion of the notch 234 (i.e., L < W).

Each of these notches 234 forms an engaging piece 235 to be engaged with each projection 223 provided in the first cover part 202. Each engaging piece 235 is formed by the narrow portion 234a of the notch 234 and has a convex portion 235a projecting in the axial direction. It is noted that each notch 234 may be formed by cutting or by integral molding.

The housing part 232 connected to the other side of the cylindrical part 231 is in a cylindrical shape with a smaller diameter than the cylindrical part 231. The holding part 233 connected to the housing part 232 on the opposite side to the cylindrical part 231 is in a cylindrical shape with a smaller diameter than the housing part 231. Incidentally, the diameter of the housing part 232 is determined in accordance with the dimension of the connector housed therein, and the diameter of the holding part 233 is determined in accordance with the diameter of the power line or the protection tube for the power line.

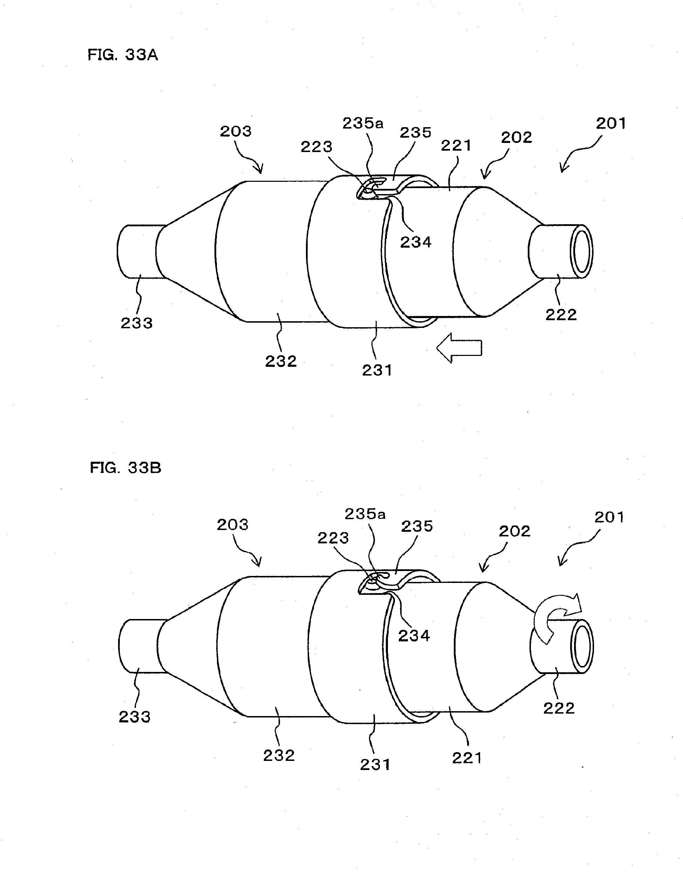

FIGS. 33A and 33B are diagrams explaining fixing procedures for the connector cover 201 for fixing the first cover part 202 and the second cover part 203. First, with the projections 223 of the first cover part 202 circumferentially aligned with the notches 234 of the second cover part 203, the first cover part 202 is inserted from the side of the cylindrical part 221 into the cylindrical part 231 of the second cover part 203 as illustrated with a white arrow in FIG. 33A by using the notches 234 as a guide for moving the projections 223 along the notches 234.

Next, as illustrated with a white arrow in FIG. 33B, the first cover part 202 is rotated relatively to the second cover part 203 by using the notches 234 as a guide for moving the projections 223 along the notches 234. When the projections 223 of the first cover part 202 reach the narrow portions 234a of the notches 234 of the second cover part 203 through this relative rotation, the convex portions 235a of the engaging pieces 235 come into contact with the projections 223. At this point, a force along a direction perpendicular to the contact face (including a component force in the outward direction along the radial direction) is applied to the convex portions 235a by the projections 223, and hence, the engaging pieces 235 are elastically deformed in the direction perpendicular to the contact face as illustrated in FIG. 33B. At this point, a force along the opposite direction perpendicular to the contact face (including a component force in the inward direction along the radial direction) is applied to the projections 223 as retroaction.

Against this force, the first cover part 202 is further rotated relatively to the second cover part 203. When the projections 223 of the first cover part 202 pass through the narrow portions 234a of the notches 234 of the second cover part 203, the force applied to the convex portions 235a of the engaging pieces 235 is removed, and therefore, the engaging pieces 235 are restored to a natural state and the first and second cover parts 202 and 203 are integrated with each other as illustrated in FIG. 30. Since a predetermined force is necessary for causing the elastic deformation of the engaging pieces 235 in passing through the narrow portions 234a, the connector cover 201 is fixed so as not to release the engagement between the first and second cover parts 202 and 203.

In the connector cover 201 of Embodiment 9 having the aforementioned structure, the projections 223 projecting toward the cylindrical part 231 of the second cover part 203 are provided on the cylindrical part 221 of the first cover part 202, and the engaging pieces 235 having flexibility to be engaged with the projections 223 are provided at the edge of the cylindrical part 231 of the second cover part 203, so that the first and second cover parts 202 and 203 may be engaged/disconnected by attaining/releasing engagement between the projections 223 and the engaging pieces 235 through relative movement and rotation between the first and second cover parts 202 and 203 with the cylindrical parts 221 and 231. In this manner, the attachment and removal may be performed through a simple operation of relatively moving/rotating the first and second cover parts 202 and 203, and the connectors housed therein may be protected so as not to be gnawed by a noxious animal such as a rat or so as not to allow foreign substances such as dust to adhere thereon. Furthermore, if a connector portion catches a fire by any possibility, the fire may be prevented from spreading around.

Moreover, since the projections 223 are moved along the notches 234 each in the substantially L shape so as to cause the elastic deformation of the engaging pieces 235 in passing through the narrow portions 234a by relatively moving/rotating the first and second cover parts 202 and 203, a predetermined force is necessary for causing the elastic deformation of the engaging pieces 235 in passing through the narrow portions 234a, and hence, the first and second cover parts 202 and 203 may be fixed so as not to be disconnected.

Since the projections 223 projecting toward the cylindrical part 231 of the second cover part 203 are provided on the cylindrical part 221 of the first cover part 202 disposed inside and the engaging pieces 235 are provided on the cylindrical part 231 of the second cover part 203 disposed outside, the engagement between the first and second cover parts 202 and 203 may be attained/released while visually checking the state of the engagement between the projections 223 and the engaging pieces 235, and hence, the attaching/removing operation may be more easily performed.

Incidentally, the projections 223 projecting toward the cylindrical part 231 of the second cover part 203 (namely, outward) are provided on the cylindrical part 221 of the first cover part 202 disposed inside and the engaging pieces 235 are provided on the cylindrical part 231 of the second cover part 203 disposed outside in this embodiment, which does not limit the invention, and the opposite is possible. Specifically, the engaging pieces may be provided on the cylindrical part of the first cover part disposed inside and projections projecting toward the cylindrical part of the first cover part (i.e., inward) may be provided on the cylindrical part of the second cover part disposed outside. In this case, there are no irregularities on the surface of the connector cover 201, which improves the appearance. Furthermore, since the engaging means is not exposed outside, foreign substances such as dust may be prevented from adhering thereon, and the removing operation may be performed smoothly after a long period of time.

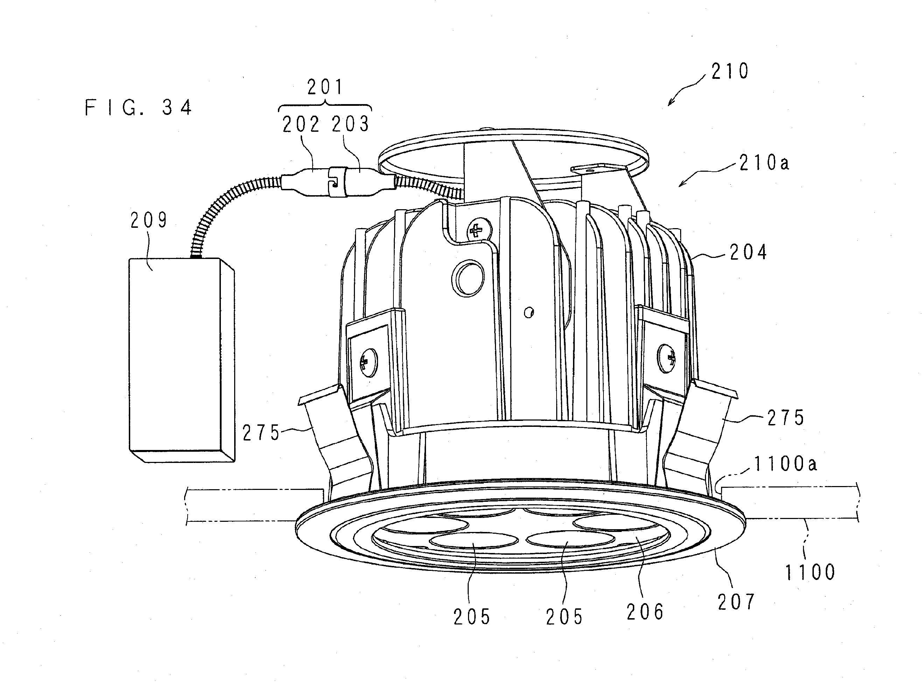

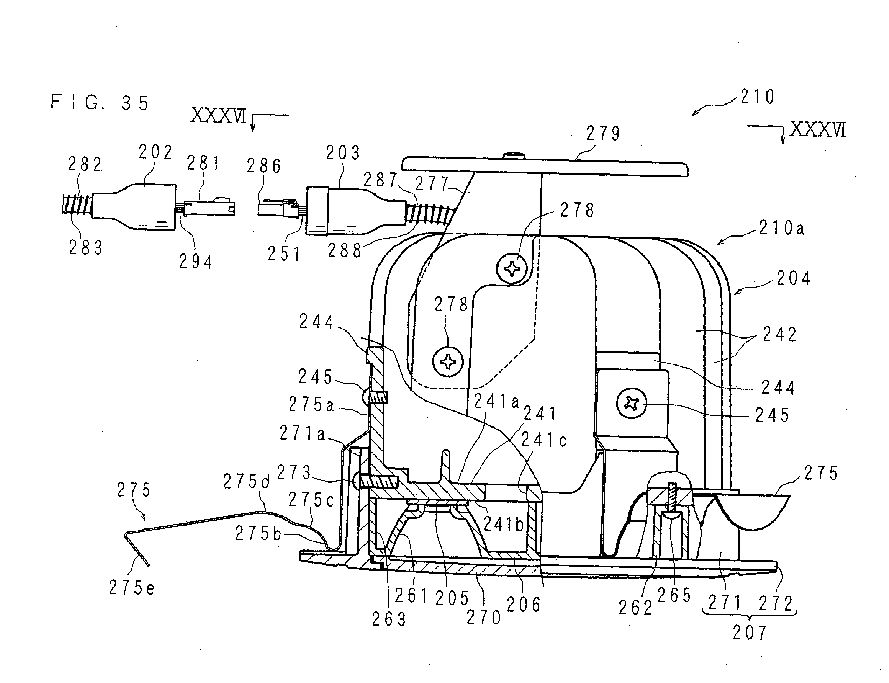

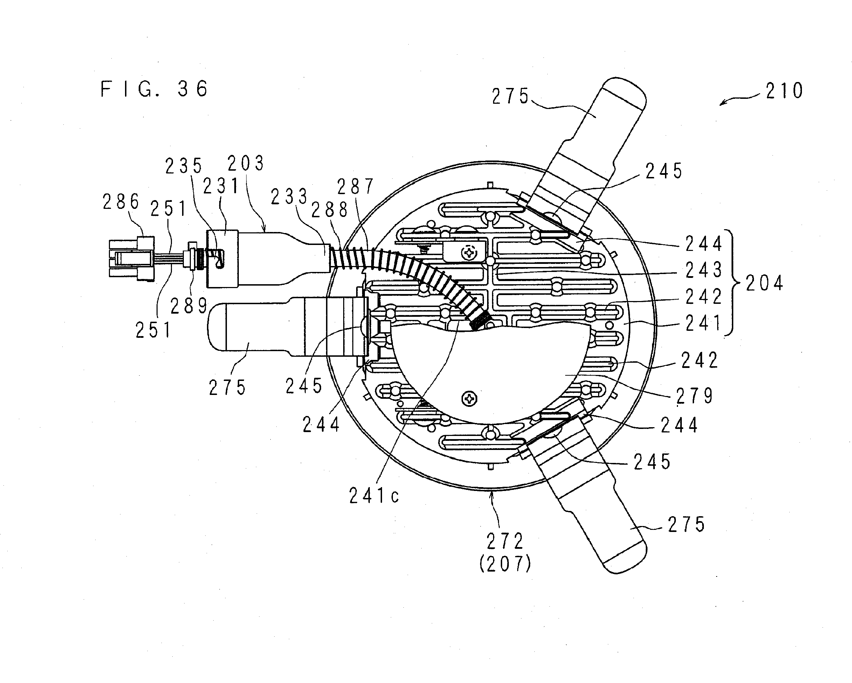

This connector cover 201 is used for protecting connectors for connecting, for example, a lighting apparatus such as a downlight mounted in a mounting hole formed in a ceiling board to a power unit. Now, as the lighting apparatus, a downlight provided on a ceiling board for locally illuminating a room will be exemplarily described. FIG. 34 is a perspective outside view of a lighting apparatus 110 including the connector cover 201 of Embodiment 9. FIG. 35 is a schematic side view of the lighting apparatus 110, a part of which is illustrated as a partial cross-sectional view. FIG. 36 is a diagram taken from a direction of arrows XXXVI-XXXVI of FIG. 35, a part of which is illustrated as a partial cross-sectional view.

In these drawings, a reference numeral 204 denotes a radiator made of a metal such as aluminum. The radiator 204 includes a heat transfer plate 241 in a substantially disc shape as illustrated in FIG. 35. On a first face 241a of the heat transfer plate 241, a plurality of heat sinking plates 242 each in the shape of a rectangular plate are provided to stand in parallel to one another. On the first face 241a of the heat transfer plate 241, a connecting plate 243 is provided to extend through substantially the centers of the plurality of heat sinking plates 242 perpendicularly to the heat sinking plates 242. Incidentally, the connecting plate 243 is formed to avoid the center of the heat transfer plate 241 as illustrated in FIG. 36, and a through hole 241c for wiring is provided at the center of the heat transfer plate 241.

Fixing parts 244 each in the shape of a rectangular plate are provided in a peripheral portion of the heat transfer plate 241 of the radiator 204 to be perpendicular to the radial direction of the heat transfer plate 241 and stand in three positions at equal intervals along the circumferential direction. Each of the fixing parts 244 is connected to and integrated with a plurality of heat sinking plates 242, and one of the fixing parts 244 is disposed to be connected to the heat sinking plates 242 at right angles.

On a second face 241b of the heat transfer plate 241 of the radiator 204, a plurality of (specifically six in the drawings) LED modules 205 working as light sources are provided at equal intervals along the circumferential direction. Each of the LED modules 205 includes a plurality of LED devices collectively packaged at the center of one face of a rectangular substrate of ceramic (such as aluminum oxide) and encapsulated with an encapsulating resin containing a phosphor dispersed therein. It is noted that a heat conduction sheet or grease is preferably provided between the LED modules 205 and the heat transfer plate 241. Heat generated from the LED modules 205 in turning on the LED modules 205 is transferred to the heat transfer plate 241, the heat sinking plates 242 and the connecting plate of the radiator 204, so as to be externally released through natural convection.

A reflector plate 206 is provided on the side of the second face 241b of the heat transfer plate 241 of the radiator 204. On the reflector plate 206, a plurality of reflecting parts 261 each having a substantially hemispherical recess are formed in positions corresponding to the LED modules 205 so as to surround the corresponding LED modules 205 when the reflector plate 206 is attached to the radiator 204.

Recesses 262 each in a substantially cylindrical shape are provided at the periphery of the reflector plate 206. Furthermore, a peripheral wall 263 is provided to stand at the periphery of the reflector plate 206, and the reflector plate 206 is fixed on the radiator 204, with the end face of the peripheral wall 263 kept in contact with the heat transfer plate 241, by inserting screws 265 into through holes formed in the recesses 262 of the reflector plate 206 and screwing them into tapped holes provided in the heat transfer plate 241. Light emitted from the LED modules 205 is reflected by the reflecting parts 261 of the reflector plate 206, so as to have an angle against the optical axis of each LED module 205 not more than a predetermined angle. As a result, the lighting apparatus 210 emits light controlled in its luminous intensity distribution characteristic so as to have high luminance in a position directly below the lighting apparatus 210.

A decorative frame 207 is provided on the side of the heat transfer plate 241 of the radiator 204. The decorative frame 207 includes a cylindrical part 271 and a ring-shaped flange 272 extended from one end of the cylindrical part 271 in a perpendicular direction along the radial direction. The cylindrical part 271 has extended parts 271a extended in a direction opposite to the flange 272 in three positions along the circumferential direction.

This decorative frame 207 is fixed on the radiator 204 by fitting the reflector plate 206 in the other end of the cylindrical part 271, inserting screws 273 into through holes provided in the extended parts 271a with the extended parts 271a kept in contact with the fixing parts 244 of the radiator 204 and screwing the screws 273 into tapped holes provided in the fixing parts 244 of the radiator 204. On the inner face of the flange 272 of the decorative frame 207, a transparent plate 270 made of a resin in a disc shape is provided so as to cover the LED modules 205. The transparent plate 270 is made of, for example, a polycarbonate resin.

Furthermore, a plurality of flat springs 275 are provided on the radiator 204. Each flat spring 275 is made of a metal such as stainless steel and is formed into a V-shape as illustrated in FIG. 35 by bending a long and narrow rectangular plate. Each flat spring 275 has a fixing part 275a in the shape of a rectangular plate provided on one side thereof. On the other side of the flat spring 275 beyond a bent part 275b, a first pressing part 275c and a second pressing part 275d each having an arc-shaped cross-section along the lengthwise direction of the flat plate 275 are connectively provided. Furthermore, the end of the flat spring 275 on the latter side is provided with a hook part 275e formed by bending the rectangular plate at an end of an arm part connected to the second pressing part 275d at an angle against the arm part toward the opposite direction to the fixing part 275a. Incidentally, the hook part 275e is provided for preventing the fall of the lighting apparatus 210 when the first pressing part 275c and the second pressing part 275d of the flat spring 275 are not in contact with a ceiling board.

These flat springs 275 are fixed on the radiator 204 in three positions at equal intervals along the circumferential direction, with the fixing parts 275a of the flat springs 275 kept in close contact with the fixing parts 244, by inserting screws 245 into through holes formed in the fixing parts 275a of the flat springs 275 and screwing them into tapped holes formed in the fixing parts 244 of the radiator 204.

An attaching plate 277 is fixed with a screw 278 on each of the heat sinking plates 242 disposed in the second positions from the outside of the radiator 204 so as to be parallel to the heat sinking plates 242. A circular plate 279 is provided on the attaching plates 277 at right angles against the attaching plates 277. This circular plate 279 is provided for preventing foreign substances such as dust and a waterdrop from entering the lighting apparatus main body 210a, particularly a space between the heat sinking plates 242.

The lighting apparatus 210 having the aforementioned structure is fixed in a mounting hole 1100a formed in a ceiling board 1100 with the flat springs 275 by inserting, from the underside, the lighting apparatus main body 210a into the mounting hole 1100a formed in the ceiling board 1100 illustrated with an alternate long and two short dashes line in FIG. 34 with the side of the transparent plate 270 disposed underside while pressing the hook parts 275e of the flat springs 275 against the lighting apparatus main body 210a, and by further inserting the lighting apparatus main body 210a with the flat springs 275 released.

In this lighting apparatus 210, power is supplied to the LED modules 205 from an external power supply through a power unit provided in a power module disposed outside the lighting apparatus main body 210a.

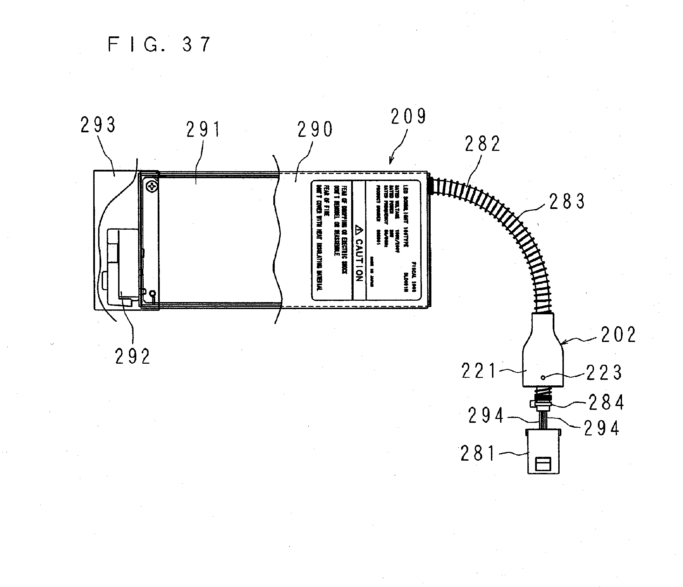

FIG. 37 is an outside view of a power module, a part of which is illustrated as a partial cross-sectional view. The power module 209 includes a power unit cover 290 in a rectangular parallelepiped external shape; a power unit 291 housed in the power unit cover 290 and including various circuit components such as a transformer, a resistor and a capacitor; a terminal table 292 connected to the power unit 291; and a terminal cover 293 housing the terminal table 292 and externally fit on one side of the power unit cover 290.

The power unit 291 of the power module 209 is connected to ends on one side of lead wires 294, that is, power lines. The ends on the other side of the lead wires 294 are connected to a female connector 281, that is, a first connector, as illustrated in FIG. 37. The female connector 281 is a connection terminal in a flat rectangular parallelepiped shape having a plurality of (specifically, four in the drawing) recesses. The lead wires 294 are brought together by a protection tube 282, and a metal protection spring 283 is externally fit around the outer circumference of the protection tube 282. The protection tube 282 and the protection spring 283 are provided for preventing the lead wires 294 from being gnawed by a noxious animal such as a rat.

On the other hand, each of the LED modules 205 is connected to ends on one side of the plural lead wires 251 running through the through hole 241c provided at the center of the heat transfer plate 241. The ends on the other side of the lead wires 251 are connected to a male connector 286, that is, a second connector, as illustrated in FIG. 36. The male connector 286 is a connection terminal in a flat rectangular parallelepiped shape having projections that may be fit in the recesses of the female connector 281. The lead wires 251 are brought together by a protection tube 287 on a side of the male connector 286, and a protection spring 288 made of a metal is fit around the outer circumference of the protection tube 287. The protection tube 287 and the protection spring 288 are provided for preventing the lead wires 251 from being gnawed by a noxious animal such as a rat.

The female connector 281 and the male connector 286 are respectively provided with the first cover part 202 and the second cover part 203 of the connector cover 201 of this invention. The first cover part 202 is provided so as to be able to house at least a part of the female connector 281 therein with its cylindrical part 221 disposed on the side of the female connector 281 and its holding part 222 disposed on the side of the ends on one side of the lead wires 294 connected to the power module 209 and with the protection tube 282 and the protection spring 283 allowed to run therethrough. It is noted that the both ends of the protection tube 282 are provided with bundling bands 284 (what is called Insulok) for bundling the lead wires and the protection tube 282. These bundling bands 284 are respectively provided inside the power unit cover 290 and the first cover part 202 for preventing the protection tube 282 from coming off from the power unit cover 290 and the first cover part 202.

The second cover part 203 is, as shown in FIG.36, provided so as to be able to house at least a part of the male connector 286 therein with its cylindrical part 231 disposed on the side of the male connector 286 and its holding part 233 disposed on the side of the ends on one side of the lead wires 251 connected to the LED modules 205 and with the protection tube 287 and the protection spring 288 allowed to run therethrough. It is noted that the both ends of the protection tube 287 are provided with bundling bands 289 (what is called Insulok) for bundling the lead wires and the protection tube 287. The bundling band 289 disposed on the side of the male connector 286 is provided to be housed in the second cover part 203 for preventing the protection tube 287 from coming off from the second cover part 203.

The male connector 286 connected to the LED modules 205 is fit in the female connector 281 connected to the power module 209. As a result, the power unit 291 provided outside the lighting apparatus main body 210a is connected to the LED modules 205 through the lead wires 294 and 251. Thereafter, the cylindrical part 221 of the first cover part 202 of the connector cover 201 is inserted into the cylindrical part 231 of the second cover part 203 and the projections 223 and the engaging pieces 235 corresponding to the engaging means are engaged with each other as described above, so as to integrate the connector cover 201. It is noted that the first cover part 202 and the second cover part 203 are formed appropriately so as to be able to respectively house the female connector 281 and the male connector 826 mutually connected therein.

Incidentally, the shapes and the systems of the male and female connectors differ among different types of apparatuses employing different specifications, and hence, there is no fear of making a mistake in combination of a lighting apparatus and a power module. Particularly when there is a lineup of merely two types of apparatuses, the mistake may be avoided by employing a male connector for a lighting apparatus main body and a female connector for a power module of a lighting apparatus of type A; and employing a female connector for a lighting apparatus main body and a male connector for a power module of a lighting apparatus of type B.

In this manner, the female connector 281 and the male connector 286 are housed in the connector cover 201, and hence, the female connector 281 and the male connector 286 are protected so as not to be gnawed by a noxious animal such as a rat or so as not to allow foreign substances such as dust to adhere thereon, and furthermore, if a connector portion catches a fire by any possibility, the fire may be prevented from spreading around, and hence, problems of the lighting apparatus such as failure and electric shock and a fire otherwise caused may be prevented.

Moreover, since the operation for relatively moving/rotating the first and second cover parts 202 and 203 described above is so simple that it may be performed with one hand, in application particularly to a lighting apparatus mounted in a mounting hole formed in a ceiling board with a power line and the connector provided in a ceiling space as the lighting apparatus 210 described above, the workability in attaching/removing the lighting apparatus is improved.

### (EMBODIMENT 10)

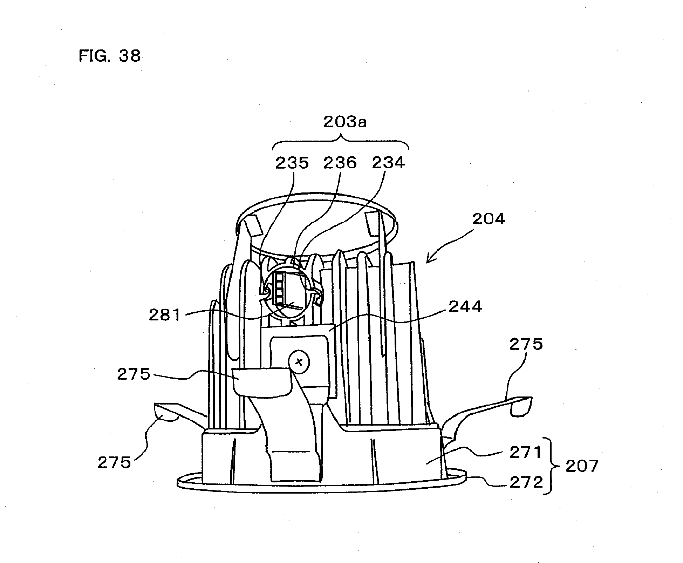

The connector cover 201 of Embodiment 9 is formed separately from the lighting apparatus main body 210a but a connector cover may be formed integrally with a lighting apparatus main body. FIG. 38 is a diagram illustrating an example where a connector cover and a lighting apparatus main body are integrally formed.

A second cover part 203a including a cylindrical part 236 in a cylindrical shape is integrally provided on three heat sinking plates 242 disposed to stand on a heat transfer plate 241 of a radiator 204 as illustrated in FIG. 38. The cylindrical part 236 is provided with notches 234 and engaging pieces 235 in the same manner as in the second cover part 203 of the connector cover 201 of Embodiment 9. The rest of the structure is the same as that of Embodiment 9 illustrated in FIGS. 30 through 37, and hence, like reference numerals are used to refer to like elements so as to omit the detailed description of the structure.

In employing this structure, a female connector 281 and a male connector 286 are first connected to each other. Next, a cylindrical part 221 of a first cover part 202 is inserted into the cylindrical part 236 of the second cover part 203a and projections 223 and the engaging pieces 235 corresponding to the engaging means are engaged in the same manner as in the connector cover 201 described in Embodiment 9, and thus, the first cover part 202 and the second cover part 203a are integrated with each other.

In this manner, the female connector 281 and the male connector 286 are housed in the connector cover, and hence, the female connector 281 and the male connector 286 are protected so as not to be gnawed by a noxious animal such as a rat or so as not to allow foreign substances such as dust to adhere thereon, and furthermore, if a connector portion catches a fire by any possibility, the fire may be prevented from spreading around, and hence, problems of the lighting apparatus such as failure and electric shock and a fire otherwise caused may be prevented.

Moreover, since the operation for relatively moving/rotating the first and second cover parts 202 and 203a is so simple that it may be performed with one hand, in application particularly to a lighting apparatus mounted in a mounting hole formed in a ceiling board with a power line and the connector provided in a ceiling space, the workability in attaching/removing the lighting apparatus is improved.

Incidentally, the engaging pieces 235 are provided on the cylindrical part 236 of the second cover part 203a in this embodiment, which does not limit the invention, and the opposite is possible. Specifically, the engaging pieces may be provided on the cylindrical part of the first cover part disposed inside and the projections projecting toward the cylindrical part of the first cover part (i.e., inward) may be provided on the cylindrical part of the second cover part disposed outside. In this case, there are no irregularities on the surface of the connector cover, which improves the appearance. Furthermore, since the engaging means is not exposed outside, foreign substances such as dust may be prevented from adhering thereon, and the removing operation may be performed smoothly after a long period of time.

It is noted that the shapes of the engaging pieces and the projections are not limited to those described in Embodiments 9 and 10 above but they may be in any shapes as far as they may be engaged with each other. Furthermore, each engaging piece is formed by using a notch formed in the cylindrical part in each of Embodiments 9 and 10, which does not limit the invention, and an engaging piece may be formed to be protruded from a cylindrical part in a cylindrical shape.

In each of Embodiments 9 and 10 described above, the LED modules 203 in which a plurality of LED devices are packaged are used as the light sources, which does not limit the invention, and an LED chip with high luminance, an EL (Electro Luminescence), a fluorescent lamp, a light bulb or the like may be used.

Furthermore, although the connector cover is used in the downlight in each of Embodiments 9 and 10 described above, the application is not limited to the downlight, but the connector cover is applicable to other types of lighting apparatuses or equipment other than a lighting apparatus.

## Claims

1. A cover attached to a mounted body to be mounted in a mounting hole formed in a member such as a ceiling board for covering a space formed between the mounted body and the mounting hole, comprising:
a covering part for covering a space formed between the mounted body and the member due to an irregularity such as burr of the mounting hole.

2. The cover according to claim 1,
wherein the covering part is provided in an outer edge of the cover.

3. A cover for covering a space formed between a mounted body mounted in a mounting hole formed in a member and an inner face of the mounting hole, comprising:
an opposing part spaced from and opposing to an edge of the mounting hole; and
a covering part provided to extent over a whole outer edge of the opposing part.

4. The cover according to any one of claims 1 through 3, wherein the covering part has a notch.

5. The cover according to claim 4,
wherein the notch has an inclined face widened toward an opening side.

6. The cover according to claim 4 or 5, further comprising a reinforcing part provided on a face opposing the member in a position corresponding to the notch.

7. The cover according to any one of claims 4 through 6, further comprising a projection disposed in the vicinity of the notch for stopping a tool to be inserted into the notch in a predetermined position.

8. A lighting apparatus comprising the cover of any one of claims 1 through 7.
